(19) Europäisches Patentamt / European Patent Office / Office européen des brevets

(11) **EP 4 382 984 A1**

(12) **EUROPEAN PATENT APPLICATION**
published in accordance with Art. 153(4) EPC

(43) Date of publication:
**12.06.2024 Bulletin 2024/24**

(21) Application number: **22852993.9**

(22) Date of filing: **01.08.2022**

(51) International Patent Classification (IPC):
**G02B 13/14** (2006.01)       **G01J 3/36** (2006.01)
**G01J 3/453** (2006.01)       **G02B 7/02** (2021.01)
**G02B 13/00** (2006.01)       **G02B 13/18** (2006.01)

(52) Cooperative Patent Classification (CPC):
**G01J 3/36; G01J 3/453; G02B 7/02; G02B 13/00; G02B 13/14; G02B 13/18**

(86) International application number:
**PCT/JP2022/029460**

(87) International publication number:
**WO 2023/013574 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.08.2021   JP 2021127842**
**03.03.2022   JP 2022032767**

(71) Applicant: **Nippon Electric Glass Co., Ltd.**
**Otsu-shi, Shiga 520-8639 (JP)**

(72) Inventor: **TOMITA, Mitsuru**
**Otsu-shi, Shiga 520-8639 (JP)**

(74) Representative: **Vidon Brevets & Stratégie**
**16B, rue de Jouanet**
**BP 90333**
**35703 Rennes Cedex 7 (FR)**

(54) **LENS UNIT, OPTICAL SYSTEM, AND SPECTRAL CHARACTERISTIC MEASURING DEVICE**

(57) Provided is a lens unit that has good resolution while sufficiently suppressing chromatic aberration, an optical system that includes the lens unit, and a spectral characteristic measurement device that includes the lens unit. A lens unit (1) includes a first lens (L1), a second lens (L2), and a third lens (L3) that are disposed in order, and is used for an infrared region that includes at least any one of wavelengths in a range of 7 pm to 14 pm. The effective diameter of the first lens (L1) is larger than the effective diameter of the third lens (L3), and the optical axis thickness of the third lens (L3) is greater than the optical axis thickness of any one of the first lens (L1) and the second lens (L2).

FIG. 1

**Description**

Technical Field

The present invention relates to a lens unit, an optical system, and a spectral characteristic measurement device.

Background Art

Patent Literature 1 discloses a near-infrared spectral characteristic measurement device which includes an objective lens that collimates signal light from a specimen, a phase shifter that is provided in collimated light, and an imaging lens that causes an image of the specimen to be formed in a detecting section. Patent Literature 2 discloses an imaging system which includes an optical system (objective lens) that collimates light from an object, a plurality of imaging lenses that each cause an image to be formed in a detecting section with use of a part of collimated light, and filters that are provided to the respective plurality of imaging lenses. Patent Literature 2 also describes design of an objective lens for the visible region.

Citation List

[Patent Literature]

    [Patent Literature 1]
    Japanese Patent No. 5637488
    [Patent Literature 2]
    Japanese Patent Application Publication Tokukai No. 2020-064165

Summary of Invention

Technical Problem

Incidentally, there is known absorption of an infrared region (for example, wavelengths of 7 pm to 14 pm) on a long wavelength side of the near-infrared region, which absorption is caused by a molecular vibration inherent in a substance. Under the circumstances, for further development of spectral measurement techniques, spectral characteristic measurement devices, such as a hyperspectral camera, are expected to be expanded to such an infrared region. Thus, a lens unit is desired which is for configuring such a spectral characteristic measurement device, which can be used in a wavelength band of the infrared region, which can be applied to an objective lens, an imaging lens, or the like, and which has good resolution while sufficiently suppressing chromatic aberration.

In view of the above problem, the object of the present invention is to provide (i) a lens unit that is for an infrared region and that has good resolution while sufficiently suppressing chromatic aberration, (ii) an optical system that includes the lens unit, and (iii) a spectral characteristic measurement device that includes the lens unit.

Solution to Problem

In order to attain the above object, a lens unit in accordance with an aspect of the present invention is a lens unit which includes a first lens, a second lens, and a third lens that are disposed in order and which is used for an infrared region that includes at least any one of wavelengths in a range of 7 pm to 14 pm, wherein an effective diameter of the first lens is larger than an effective diameter of the third lens, and an optical axis thickness of the third lens is greater than an optical axis thickness of any one of the first lens and the second lens.

Advantageous Effects of Invention

A lens unit in accordance with an aspect of the present invention has good resolution while sufficiently suppressing chromatic aberration.

Brief Description of Drawings

Fig. 1 is a cross-sectional view that illustrates a configuration of a main part of an optical system to which lens units in accordance with an embodiment are applied and that is along an optical axis.

Fig. 2 is a cross-sectional view illustrating a state where a first lens unit in accordance with an embodiment is accommodated and fixed in a lens barrel.

Fig. 3 is a front view illustrating the state where the first lens unit in accordance with an embodiment is accommodated and fixed in the lens barrel.

Fig. 4 is a cross-sectional view illustrating a state where a lens unit of a modification is accommodated and fixed in a lens barrel.

Fig. 5 is a cross-sectional view illustrating a spectral characteristic measurement device to which lens units in accordance with an embodiment are applied.

Fig. 6 is a ray diagram obtained by illustrating optical paths on a cross-sectional view of a main part of an optical system to which lens units in accordance with Example 1 are applied.

Fig. 7 is a graph showing spatial frequency dependence of MTFs in a wavelength range of 7 pm to 14 pm of the optical system to which the lens units in accordance with Example 1 are applied.

Fig. 8 is an aberration diagram of the optical system to which the lens units in accordance with Example 1 are applied.

Fig. 9 is a ray diagram obtained by illustrating optical paths on a cross-sectional view of a main part of an optical system to which lens units in accordance with Example 2 are applied.

Fig. 10 is a graph showing spatial frequency dependence of MTFs in a wavelength range of 7 pm to 14 pm of the optical system to which the lens units in accordance with Example 2 are applied.

Fig. 11 is an aberration diagram of the optical system to which the lens units in accordance with Example 2 are applied.

Fig. 12 is a ray diagram obtained by illustrating optical paths on a cross-sectional view of a main part of an optical system to which lens units in accordance with Example 3 are applied.

Fig. 13 is a graph showing spatial frequency dependence of MTFs in a wavelength range of 7 pm to 14 pm of the optical system to which the lens units in accordance with Example 3 are applied.

Fig. 14 is an aberration diagram of the optical system to which the lens units in accordance with Example 3 are applied.

Fig. 15 is a ray diagram obtained by illustrating optical paths on a cross-sectional view of a main part of an optical system to which lens units in accordance with Example 4 are applied.

Fig. 16 is a ray diagram obtained by illustrating optical paths on a cross-sectional view of a main part of an optical system to which lens units in accordance with Example 5 are applied.

Fig. 17 is a ray diagram obtained by illustrating optical paths on a cross-sectional view of a main part of an optical system to which lens units in accordance with Example 6 are applied.

Fig. 18 is a ray diagram obtained by illustrating optical paths on a cross-sectional view of a main part of an optical system to which lens units in accordance with Example 7 are applied.

Fig. 19 is a ray diagram obtained by illustrating optical paths on a cross-sectional view of a main part of an optical system to which lens units in accordance with Example 8 are applied.

Fig. 20 is a graph showing spatial frequency dependence of MTFs in a wavelength range of 7 pm to 14 pm of the optical system to which the lens units in accordance with Example 8 are applied.

Fig. 21 is a graph showing field curvature of the optical system to which the lens units in accordance with Example 8 are applied.

Fig. 22 is a ray diagram obtained by illustrating optical paths on a cross-sectional view of a main part of an optical system to which lens units in accordance with Example 9 are applied.

Fig. 23 is a graph showing spatial frequency dependence of MTFs in a wavelength range of 7 pm to 14 pm of the optical system to which the lens units in accordance with Example 9 are applied.

Fig. 24 is a graph showing field curvature of the optical system to which the lens units in accordance with Example 9 are applied.

Fig. 25 is a graph showing axial chromatic aberration in the wavelength range of 7 pm to 14 pm of the optical systems to which the lens units in accordance with Examples 1, 8, and 9 are applied.

Fig. 26 is a ray diagram obtained by illustrating optical paths on a cross-sectional view of a main part of an optical system to which lens units in accordance with Comparative Example 1 are applied.

Fig. 27 is a ray diagram obtained by illustrating optical paths on a cross-sectional view of a main part of an optical system to which lens units in accordance with Comparative Example 2 are applied.

Fig. 28 is a ray diagram obtained by illustrating optical paths on a cross-sectional view of a main part of an optical system to which lens units in accordance with Comparative Example 3 are applied.

Description of Embodiments

[Embodiments]

<Outline of optical system>

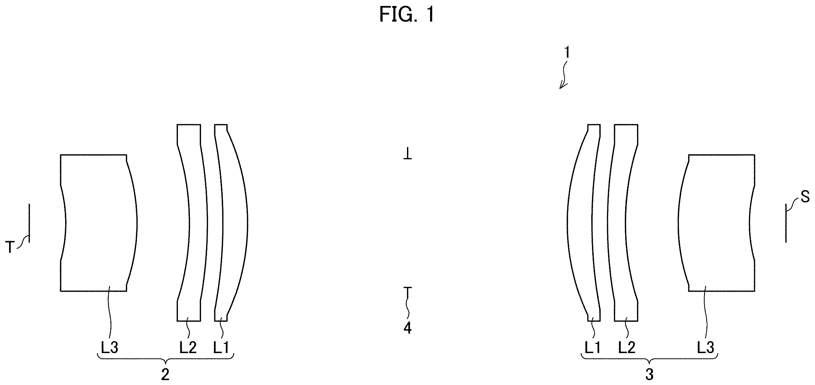

An optical system 1 in accordance with an embodiment is an optical system which can be used in a wavelength range of an infrared region (7 pm to 14 pm) and in which an image of an object plane T is formed on an image plane S on which an image sensor (detecting section) or the like can be disposed. Fig. 1 is a cross-sectional view that illustrates a configuration of a main part of the optical system 1 and that is along an optical axis. Note, here, that a cross-sectional view of an optical system 1 of Example 1 described later is illustrated as an example. Note that the infrared region means a region of wavelengths from 7 $\mu$m to 14 pm, unless otherwise specified.

The optical system 1 includes a first lens unit 2 that is a lens unit in accordance with an aspect of the present invention, a second lens unit 3 that is a lens unit in accordance with an aspect of the present invention, and a diaphragm 4. The first lens unit 2 is an objective lens, and collimates light that has entered the first lens unit 2 from an object plane T side. The first lens unit 2 is configured such that a first lens L1, a second lens L2, and a third lens L3 are disposed in order from a diaphragm 4 side toward the object plane T side.

The second lens unit 3 is an imaging lens that converges the collimated light on the image plane S, and is configured such that a first lens L1, a second lens L2, and a third lens L3 are disposed in order from a diaphragm 4 side toward an image plane S side.

The second lens unit 3 has a configuration similar to that of the first lens unit 2. In the optical system 1, the second lens unit 3 is disposed so as to be bilaterally symmetrical to the first lens unit 2 with respect to the diaphragm 4. The diaphragm for each of these lens units is located to a collimated light side of the first lens L1. In the optical system 1, the diaphragm 4 for each of the units is configured so as to be shared.

It is possible to apply the optical system 1 to a multispectral camera or a hyperspectral camera by, for example, disposing a filter or a phase shifter in a vicinity of the position of the diaphragm 4.

<Lens units>

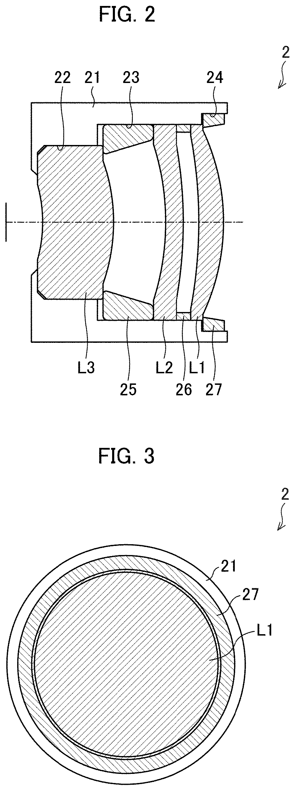

The lens units are described below. Since the second lens unit 3 has a configuration similar to that of the first lens unit 2, the first lens unit 2 is described, unless otherwise specified. The first lens unit 2 is accommodated and fixed in a lens barrel 21. Fig. 2 is a cross-sectional view illustrating a state where the first lens unit 2 is accommodated and fixed in the lens barrel 21. Fig. 3 is a front view illustrating the first lens unit 2.

The lens barrel 21 includes a first hole 22, a second hole 23, and a third hole 24. The third lens L3 is fitted in the first hole 22 in a state where the optical axis is aligned with the central axis of the lens barrel 21. The second hole 23 is connected to the first hole 22, and has a diameter larger than that of the first hole 22. The second lens L2 is fitted in the second hole 23 in a state where a first spacer 25 having a ring shape intervenes between the second lens L2 and the third lens L3. The first lens L1 is fitted in the second hole 23 in a state where a second spacer 26 having a ring shape intervenes between the first lens L1 and the second lens L2. The third hole 24 is connected to the second hole 23, and has a diameter larger than that of the second hole 23. A third spacer 27 having a ring shape is fitted in the third hole 24. A surface of the first lens L1 which surface is not in contact with the second spacer 26 is pressed by the third spacer 27.

[Material of lens barrel]

It is preferable that an aluminum alloy, for example, A5052 or A5056, be used as a material of the lens barrel 21. Such an aluminum alloy may be subjected to a satin treatment (treatment for making asperities). Further, the aluminum alloy may be used in a state of being black anodized. The material of the lens barrel 21 is not limited to the aluminum alloy. For example, the lens barrel 21 may be made of SUS304 (austenitic stainless steel), and black trivalent chromium plating may be applied to a surface layer.

[Optical axis thicknesses of and interval between lenses]

The effective diameter of the first lens L1 is larger than the effective diameter of the third lens L3. The optical axis thickness t3 of the third lens L3 is greater than the optical axis thickness of each of the first lens L1 and the second lens L2. These configurations cause the second lens unit 3, which is an imaging lens, to have good resolution.

The optical axis thickness t3 of the third lens L3 is preferably 0.5 times to 2 times a second distance d2 that is a distance on the optical axis between the second lens L2 and the third lens L3 (distance between respective surfaces of the second lens L2 and the third lens L3 which surfaces face each other). In this case, the optical system 1 has a high modulation transfer function (MTF) in each of a tangential direction and a sagittal direction at a spatial frequency of 41.7 cycles/mm. The spatial frequency of 41.7 cycles/mm corresponds to a Nyquist frequency $f_N$ of an image sensor having a pixel pitch of 12 pm.

That is, the first lens unit 2 (second lens unit 3) has such good resolution as to be used for an image sensor that is for an infrared region and that has a pixel pitch substantially equal to a wavelength. That the MTF at the above-described spatial frequency is high means having such good resolution as to be used for an image sensor that has a narrow pitch substantially equal to a wavelength.

A first distance d1 that is a distance on the optical axis between the first lens L1 and the second lens L2 is preferably shorter than the second distance d2. In this case, a numerical aperture (NA) on an image side becomes higher, and it is possible to reduce the root mean square (RMS) radius of a concentrated spot on the image plane. The thickness of the first spacer 25 is preferably caused to be greater than the thickness of the second spacer 26. In this case, a tilt error is unlikely to occur when the lenses are assembled in the lens barrel.

The ratio of the second distance d2 to the first distance d1 is preferably not more than 9.

[Materials of lenses]

Examples of a material of each lens include germanium and chalcogenide glass. The chalcogenide glass contains 20% to 90% of tellurium (Te) by mol%, and preferably contains at least any one of 0% to 50% of germanium (Ge) and 0% to 50% of gallium (Ga). Absorption of light by the chalcogenide glass is very little over a wide wavelength range of the infrared region, i.e., a wavelength range of 7 pm to 14 pm, and tends to have a good internal transmittance at least in the above wavelength range. An internal transmittance refers to a transmittance inside the material, and does not include a reflection loss on a surface of the material. Specifically, in a case of a thickness of 2 mm, the chalcogenide glass is capable of achieving an internal transmittance of not less than 90%, particularly not less than 95%, at a wavelength of 10 pm. Such chalcogenide glass was developed by the applicant of the present application (see PCT International Publication, No. WO2020/105719A1).

The Abbe number of the chalcogenide glass at a wavelength of 10 $\mu$m is preferably not less than 100 or not less than 150, and particularly preferably not less than 200. The Abbe number ($v$10) is calculated by an expression below. Application of the chalcogenide glass having the above Abbe number makes it possible to suppress chromatic aberration.

v10=(refractive index at wavelenght of 10$\mu$m - 1) /

(refractive index at wavelength of 8 $\mu$m - refractive index at wavelength of 12 $\mu$m)

The refractive index of the chalcogenide glass at a wavelength of 10 pm is preferably 2.5 to 4.0, 2.74 to 3.92, or 2.8 to 3.8, and particularly preferably 2.9 to 3.7. In a case where the refractive index is low, it is necessary to cause the radius of curvature of the lens to be smaller than that of a lens made of a material having a high refractive index. This is likely to result in an increase in the degree of difficulty in processing the lens. Furthermore, there is a possibility that an optical degree of freedom is impaired, e.g., the thickness in the direction of the optical axis becomes greater.

The chalcogenide glass preferably does not contain a toxic substance such as As, Se, or Tl. This makes it possible to reduce an environmental load.

The third lens L3 is preferably made of a material which has, at a wavelength of 10 pm, an internal transmittance that is equal to or higher than the internal transmittance of a material of which the second lens L2 is made and that is equal to or higher than the internal transmittance of a material of which the first lens L1 is made. The above configuration causes an image formed by the optical system 1 to have good resolution. For example, in a case of a thickness of 2 mm, the internal transmittance of the material of which the third lens L3 is made is preferably not less than 90% and particularly preferably not less than 95% at a wavelength of 10 pm. For example, the third lens L3 is preferably made of the above-described chalcogenide glass.

The third lens L3 is preferably made of the chalcogenide glass having a refractive index of 2.5 to 4.0 at a wavelength of 10 pm. The above configuration causes an image formed by the optical system 1 to have good resolution.

The second lens L2 is preferably made of the chalcogenide glass having a refractive index of 2.5 to 4.0 at a wavelength of 10 pm. The above configuration causes an image formed by the optical system 1 to have better resolution.

The first lens L1 is preferably made of germanium. In this case, the first lens L1 has good durability and good hardness.

[Shapes of lenses]

Each lens of the first lens unit 2 (second lens unit 3) preferably has the following configuration. The first lens L1 preferably has positive power and has a meniscus shape in which a second lens L2 side of the first lens L1 is concave. The second lens L2 preferably has negative power. The third lens L3 preferably has positive power and has a meniscus shape in which a second lens L2 side of the third lens L3 is convex. These configurations make it possible to cause the lens unit to be compact.

[Diaphragm]

The first lens L1 preferably has the diaphragm 4 that is located to a side of the first lens L1 which side is opposite from the second lens L2 in the direction of the optical axis. The ratio of the diameter of the diaphragm 4 to the effective diameter of an image is preferably 3 to 5 and more preferably 3 to 4.5. This configuration causes the NA on the image side to be high in the second lens unit 3, which is an imaging lens. Moreover, an NA on the object plane side becomes high in the first lens unit 2, which is an objective lens.

[Shapes of surfaces of lenses]

At least one surface of the first lens L1 is preferably a spherical lens. The first lens L1 is often disposed at a position at which misalignment easily occurs. Therefore, the above configuration makes it easy to suppress occurrence of a tilt error. Both surfaces of the first lens L1 are more preferably spherical lenses.

At least one surface of the second lens L2 or the third lens L3 is preferably an aspherical surface, or at least one surface of each of the second lens L2 and the third lens L3 is preferably an aspherical surface. In this specification, the aspherical surface includes a diffraction surface. Typically, the second lens L2 and the third lens L3 are disposed at respective positions at each of which misalignment is unlikely to occur. Therefore, a tilt is unlikely to occur when each of the second lens L2 and the third lens L3 is mounted on the lens barrel 21. Thus, even in a case where at least one of the second lens L2 and the third lens L3 has an aspherical surface, a reduction in the MTF and an expansion of the RMS radius which reduction and expansion are caused by occurrence of a tilt are unlikely to occur, and also aberration is suppressed. A surface of the third lens L3 which surface is located on a side opposite from a side that faces the second lens L2 is more preferably an aspherical surface. Alternatively, a surface of the second lens L2 which surface is located on a side that faces the third lens L3 is more preferably an aspherical surface. In this case, as described later, since misalignment is unlikely to occur when each of the second lens L2 and the third lens L3 is assembled in the lens barrel, an effect of a tilt is more unlikely to be exercised even in a case where at least one of the second lens L2 and the third lens L3 has an aspherical surface. Note that a surface of the second lens L2 which surface is located on a side that faces the first lens L1 may be an aspherical surface.

The second lens L2 preferably has a diffraction surface. More specifically, at least one of the surface of the second lens L2 which surface is located on the side that faces the third lens L3 and the surface of the second lens L2 which surface is located on the side that faces the first lens L1 is preferably a diffraction surface. In this case, chromatic aberration is easily reduced. A level difference between a concave and a convex of the diffraction surface is preferably 1 pm to 10 $\mu$m. In this case, chromatic aberration is more easily suppressed.

[NA]

In the second lens unit 3, which is an imaging lens, the NA on the image side preferably satisfies not less than 0.4. The NA on the image side is directly connected to resolution. Therefore, the resolution of the optical system 1 is improved.

<MTF of optical system>

The MTF in the wavelength range of 7 $\mu$m to 14 $\mu$m at the spatial frequency of 41.7 cycles/mm satisfies preferably not less than 0.35 and particularly preferably not less than 0.40 in an image circle. This configuration causes the optical system 1 to have good resolution, resulting in good resolution on the image plane S.

<Modification of lens unit>

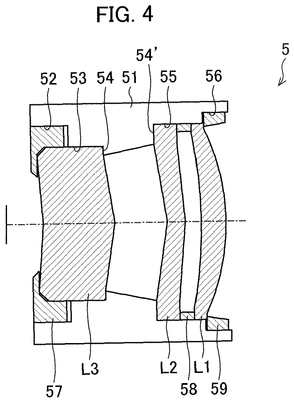

A lens unit 5 of a modification is described below. Fig. 4 is a cross-sectional view illustrating a state where the lens unit 5 is accommodated and fixed in a lens barrel 51. The lens barrel 51 has a first hole 52, a second hole 53, a third hole 55, and a fourth hole 56. A third lens L3 is fitted in the first hole 52 and the second hole 53 in a state where an optical axis is aligned with the central axis of the lens barrel 51. A circumferential edge part of a surface of the third lens L3 which surface does not face a second lens L2 is pressed by a first spacer 57 having a ring shape. The first spacer 57 having a ring shape is fitted in the first hole 52. The second hole 53 is connected to the first hole 52, and has a diameter smaller than that of the first hole 52. The second hole 53 has a protruding part 54 that engages with a circumferential edge part of a surface of the third lens L3 which surface is not in contact with the first spacer 57. The third hole 55 is connected to the second hole 53, and has a diameter larger than that of the second hole 53. The third hole 55 has a protruding part 54' that engages with a circumferential edge part of a surface of the second lens L2 which surface is not in contact with a second spacer 58. The second lens L2, the second spacer 58 having a ring shape, and a first lens L1 are fitted in the third hole 55 in order. The fourth hole 56 is connected to the third hole 55, and has a diameter larger than that of the third hole 55. A third spacer 59 having a ring shape is fitted in the fourth hole 56. The third spacer 59 presses a circumferential edge part of a surface of the first lens L1 which surface is not in contact with the second spacer 58.

In the lens unit 5, at least one surface of the second lens L2 or the third lens L3 is preferably an aspherical surface, or at least one surface of each of the second lens L2 and the third lens L3 is preferably an aspherical surface. Typically, the second lens L2 and the third lens L3 are disposed at respective positions at each of which misalignment is unlikely to occur. Therefore, a tilt is unlikely to occur when each of the second lens L2 and the third lens L3 is mounted on the lens barrel 51. Thus, even in a case where at least one of the second lens L2 and the third lens L3 has an aspherical surface, a reduction in an MTF and an expansion of an RMS radius which reduction and expansion are caused by occurrence of a tilt are unlikely to occur, and also aberration is easily suppressed. Note that at least one of respective surfaces of the second lens L2 and the third lens L3 which surfaces face each other is more preferably an aspherical surface. In this case, a deterioration of resolution which deterioration is caused by a slight tilt error or decenter error during assembly of the lenses is unlikely to be induced.

<Spectral characteristic device>

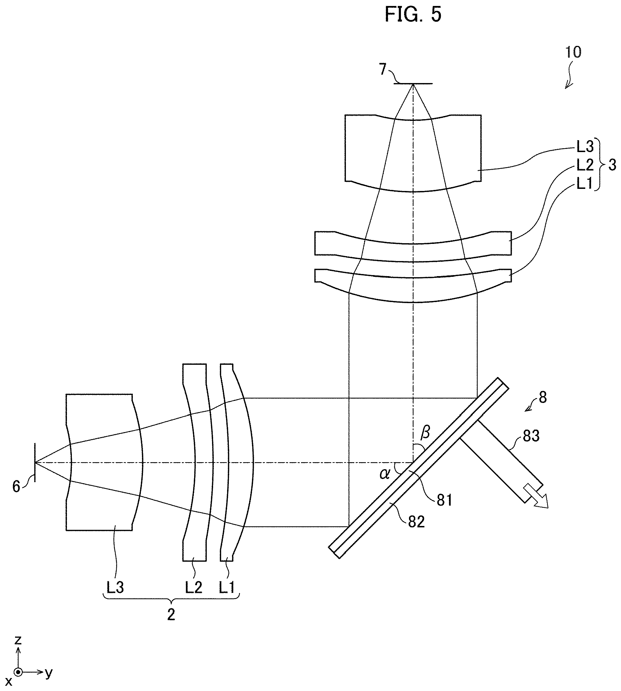

Fig. 5 is a cross-sectional view illustrating a spectral characteristic measurement device 10 to which lens units in accordance with an embodiment are applied. The spectral characteristic measurement device 10 includes a first lens unit 2, a second lens unit 3, a sample support plate 6, a detecting section 7, and a phase shifter 8. The configurations of the first lens unit 2 and the second lens unit 3 of the spectral characteristic measurement device 10 are similar to those of the first lens unit 2 and the second lens unit 3 of the optical system 1.

In the spectral characteristic measurement device 10, a third lens L3 of the first lens unit 2 is disposed so as to face the sample support plate 6, and a third lens L3 of the second lens unit 3 is disposed so as to face the detecting section 7. The phase shifter 8 is disposed between the first lens unit 2 and the second lens unit 3. The optical axis of the first lens unit 2 and the optical axis of the second lens unit 3 are perpendicular to each other in the phase shifter 8. In the spectral characteristic measurement device 10, the optical axis is bent perpendicularly in the phase shifter 8 of a reflection type. However, a basic optical configuration is the same as that of the above-described optical system 1 of a transmission type. The phase shifter 8 is disposed in a vicinity of the position of a diaphragm 4 of the optical system 1. That is, the first lens unit 2 and the second lens unit 3 are disposed symmetrically with respect to the phase shifter 8.

In the present embodiment, the spectral characteristic measurement device 10 employs the phase shifter 8 of a reflection type. The phase shifter 8 includes a fixed mirror section 81, a movable mirror section 82, and a driving section 83. The fixed mirror section 81 and the movable mirror section 82 are disposed so as to be arranged in the direction perpendicular to the drawing surface of Fig. 5 (direction of an x axis) in a state where the movable mirror section 82 is located on a far side of the direction of the x axis with respect to the fixed mirror section 81. The fixed mirror section 81 and the movable mirror section 82 are disposed so as to be tilted $\alpha$ degrees (approximately 45 degrees) with respect to the optical axis of the first lens unit 2. That is, the fixed mirror section 81 and the movable mirror section 82 are disposed so as to be tilted $\beta$ degrees (approximately 45 degrees) with respect to the optical axis of the second lens unit 3. The movable mirror section 82 is configured such that the movable mirror section 82 can be moved in the direction perpendicular to a surface of the movable mirror section 82. This causes a phase difference between a first light beam that has been reflected by the fixed mirror section 81 and a second light beam that has been reflected by the movable mirror section 82. Note that the phase shifter 8 is not limited the reflection type, and may be of a transmission type.

Infrared light is emitted from a light source (not illustrated) toward a sample (not illustrated) in a state where the sample is supported on the sample support plate 6. The infrared light is scattered by various components of the sample, and the scattered light enters the third lens L3 of the first lens unit 2. The scattered light is caused to be a collimated light beam by the first lens unit 2. The collimated light beam reaches the fixed mirror section 81 and the movable mirror section 82 of the phase shifter 8. A part of the light is reflected by the fixed mirror section 81, and enters a first lens L1 of the second lens unit 3 as a first light beam. The remaining part of the light is reflected by the movable mirror section 82, and enters the first lens L1 of the second lens unit 3 as a second light beam. The first light beam and the second light beam that have entered the second lens unit 3 cause an image to be formed on a light receiving surface of the detecting section 7, so that an interference image is formed.

In a case where a difference in optical path length between the first light beam and the second light beam is changed by moving the movable mirror section 82, a waveform of an interferogram (change in imaging intensity (change in intensity of interference light)) is obtained. By Fourier transform of the interferogram, a spectral characteristic of the sample is obtained. The spectral characteristic measurement device 10 includes lens units of an aspect of the present invention. Therefore, an image formed in the detecting section 7 has good resolution. This makes it possible to obtain a waveform of a clear and well resolved interferogram.

Examples

The following description will discuss an embodiment of the present invention in more detail with reference to examples and comparative examples. Note that the present invention is not limited to the following examples. An embodiment of the present invention can be altered and implemented as appropriate within the scope that is adaptable to the gist described before and later. The present invention also includes, in its technical scope, embodiments thus obtained.

<Example 1>

A lens unit of Example 1 is the first lens unit or the second lens unit 3 illustrated in Fig. 1. The second lens unit 3 is described below. However, the first lens unit also has the same configuration. Tables 1 and 2 below respectively show basic lens data and aspherical surface data of the second lens unit 3 of Example 1.

In Table 1, "Distance" indicates a distance on an optical axis between surfaces, and "Material" indicates a material of each lens with use of a symbol. "CH" represents chalcogenide glass, and "G" represents germanium. The unit of a length is (mm). Note that chalcogenide glass used in the examples and the comparative examples below has a refractive index of 3.465 at a wavelength of 10 $\mu$m and an Abbe number $\nu$10 of 253. Germanium has a refractive index of 4.004 at wavelength of 10 pm and an Abbe number $\nu$10 of 942. Note that, in the examples and the comparative examples below, an infrared sensor (detecting section 7) having a pitch of 12 pm was premised.

Surface numbers indicate the order from a collimated light side toward an image plane S. The surface number 1 indicates the position of a diaphragm. An aspherical surface is indicated by * (asterisk) following a numeral of the surface number.

[Table 1]

| Example 1 | Basic lens data | | | |
|---|---|---|---|---|
| Surface number | Radius of curvature | Distance | Material | Effective diameter |
| 1 (Diaphragm) | ∞ | 40.00 | | 32.0 |
| 2 | 55.380 | 6.00 | G | 46.4 |
| 3 | 110.945 | 4.00 | | 44.0 |
| 4 | 123.082 | 4.50 | CH | 41.0 |
| 5* | 67.226 | 13.00 | | 39.0 |
| 6 | 45.300 | 18.00 | CH | 31.0 |
| 7 | 41.447 | 9.00 | | 20.0 |
| Image plane | ∞ | | | 9.6 |

As shown in Table 1, a first lens L1 of the second lens unit 3 is made of germanium, and a second lens L2 and a third lens L3 each employ chalcogenide glass. The optical axis thickness t3 of the third lens L3 is greater than the optical axis thickness of each of the first lens L1 and the second lens L2. The effective diameter of the first lens L1 is larger than the effective diameter of the third lens L3. A similar relationship also applies to each of Examples 2 through 9.

[Table 2]

| Example 1 | Aspherical surface data |
|---|---|
| Coefficient | Fifth surface |
| $\kappa$ | 0 |
| A2 | 0 |
| A4 | 8.291500E-07 |

(continued)

| Example 1 | Aspherical surface data |
|---|---|
| Coefficient | Fifth surface |
| A6 | 1.330800E-10 |
| A8 | 0 |
| A10 | 0 |

The definition of an aspherical surface data shape is as follows:

$$Z = \frac{h^2/r}{1+\sqrt{1-(1+\kappa)(h/r)^2}} + \sum A_n h^n$$

h: Height from optical axis
r: Vertex radius of curvature
$\kappa$: Conic constant
An: n-th order non-curved coefficient (n: even number)
Z: Distance at h from point on aspherical surface to tangential plane of aspherical vertex

Table 3 shows t3/cps, t3/d2, d2/d1, cpa/cps, an F-number, f, and an NA of the second lens unit 3 of Example 1. Table 3 further shows results of MTFs and spot diagrams of an optical system 1 of Example 1 which optical system 1 employs lens units of Example 1 as an objective lens (first lens unit 2) and an imaging lens (second lens unit 3). In Table 3, the "t3" represents the thickness of the third lens L3 in the direction of the optical axis (distance shown in the row "Surface 6" of the basic lens data), the "φs" represents the effective diameter of the image plane S, the "d2" represents a distance on the optical axis between the second lens L2 and the third lens L3 (distance shown in the row "Surface 5" of the basic lens data), the "d1" represents a distance on the optical axis between the first lens L1 and the second lens L2 (distance shown in the row "Surface 3" of the basic lens data), and the "φa" represents the diameter of an aperture diaphragm. Further, the "f" represents a focal length, and the "NA" represents an NA on an image side.

[Table 3]

| | t3/φs | t3/d2 | d2/d1 | φa/φs | F-number | f (mm) | NA | MTF @41.7cycle/mm | Spot diagram |
|---|---|---|---|---|---|---|---|---|---|
| Example 1 | 1.88 | 1.38 | 3.25 | 3.33 | 1.16 | 37.2 | 0.430 | 0.412 | good |
| Example 2 | 1.88 | 1.29 | 7.00 | 3.43 | 1.09 | 36.1 | 0.458 | 0.441 | good |
| Example 3 | 1.88 | 0.82 | 7.33 | 3.33 | 1.12 | 35.7 | 0.448 | 0.446 | good |
| Example 4 | 1.88 | 0.82 | 7.33 | 3.33 | 1.20 | 38.2 | 0.418 | 0.369 | good |
| Example a | 2.60 | 0.89 | 8.00 | 3.33 | 1.20 | 38.2 | 0.419 | 0.371 | good |
| Example 6 | 2.60 | 0.89 | 8.00 | 3.34 | 1.19 | 38.1 | 0.420 | 0.409 | good |
| Example 7 | 3.54 | 9.44 | 0.72 | 4.36 | 1.17 | 49.1 | 0.428 | 0.352 | good |
| Example 8 | 1.88 | 1.38 | 3.25 | 4.83 | 1.10 | 35.2 | 0.453 | 0.444 | good |
| Example 9 | 1.49 | 0.79 | 4.50 | 3.33 | 1.16 | 37.1 | 0.431 | 0.423 | good |
| Comparative Example 1 | 0.63 | 1.43 | 0.62 | 4.17 | 1.42 | 56.7 | 0.353 | 0.277 | bad |
| Comparative Example 2 | 2.71 | 5.20 | 1.00 | 4.17 | 1.24 | 49.5 | 0.404 | 0.298 | bad |
| Comparative Example 3 | 0.31 | 0.10 | 10.0 | 3.33 | 1.35 | 43.1 | 0.371 | 0.309 | bad |

The total length (sum of distances between surfaces) of the optical system 1 of Example 1 is 189 mm.
As shown in Table 3, the NA of the second lens unit 3 of Example 1 exceeds 0.4. Thus, the second lens unit 3 of Example 1 is suitable for a hyperspectral camera, and also is applicable to various optical systems.

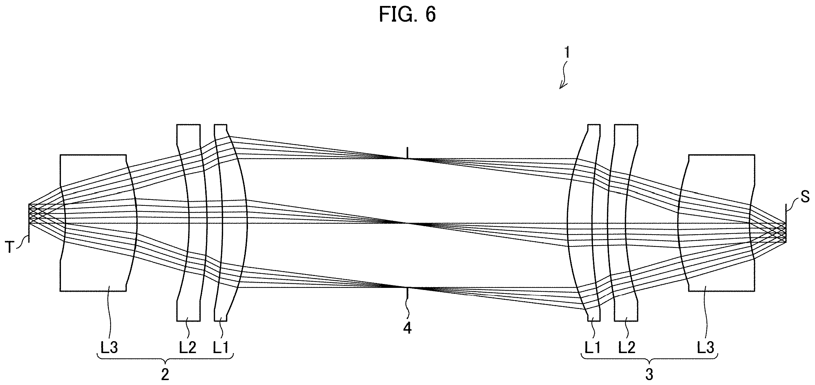

Fig. 6 is a ray diagram obtained by illustrating optical paths on a cross-sectional view of a main part of the optical system 1 of Example 1 which optical system 1 employs the lens units of Example 1 as an objective lens (first lens unit 2) and an imaging lens (second lens unit 3).

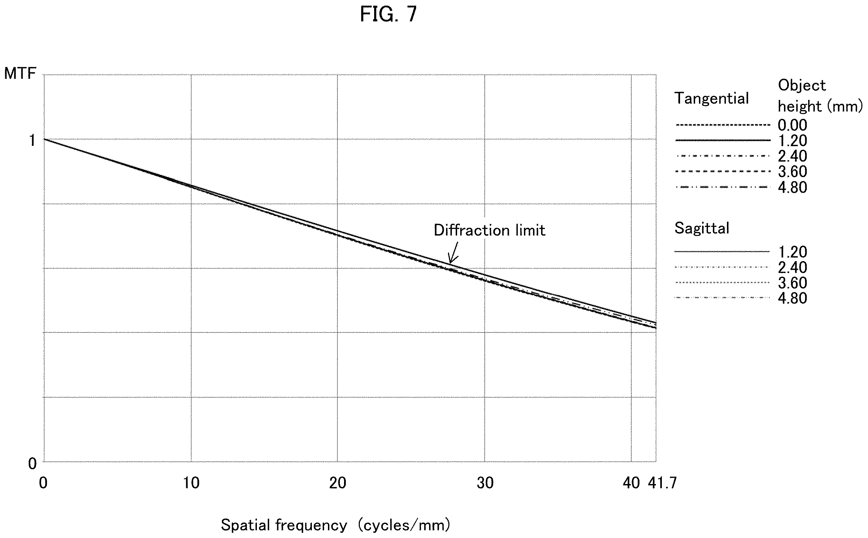

Fig. 7 is a graph showing spatial frequency dependence of the MTFs of the optical system 1 of Example 1 in a wavelength range of 7 pm to 14 pm. In Fig. 7, the MTFs in a tangential direction and a sagittal direction are shown. As describe above, the Nyquist frequency $f_N$ of an image sensor having a pixel pitch of 12 pm is 41.7 cycles/mm. According to Fig. 7, the MTFs of the optical system 1 of Example 1 are each not less than 0.35 at a spatial frequency of 41.7 cycles/mm. Therefore, the optical system 1 of Example 1 has good MTFs. Thus, it is found that good resolution that allows use for an image sensor having a narrow pitch substantially equal to a wavelength is obtained.

Note that Table 3 shows an MTF at the spatial frequency of 41.7 cycles/mm. As the MTF, Table 3 shows a minimum one of values in the tangential direction and the sagittal direction regarding light beams emitted from object heights. Note, here, that the object heights Y are 0.00 mm, 1.20 mm, 2.40 mm, 3.60 mm, and 4.80 mm.

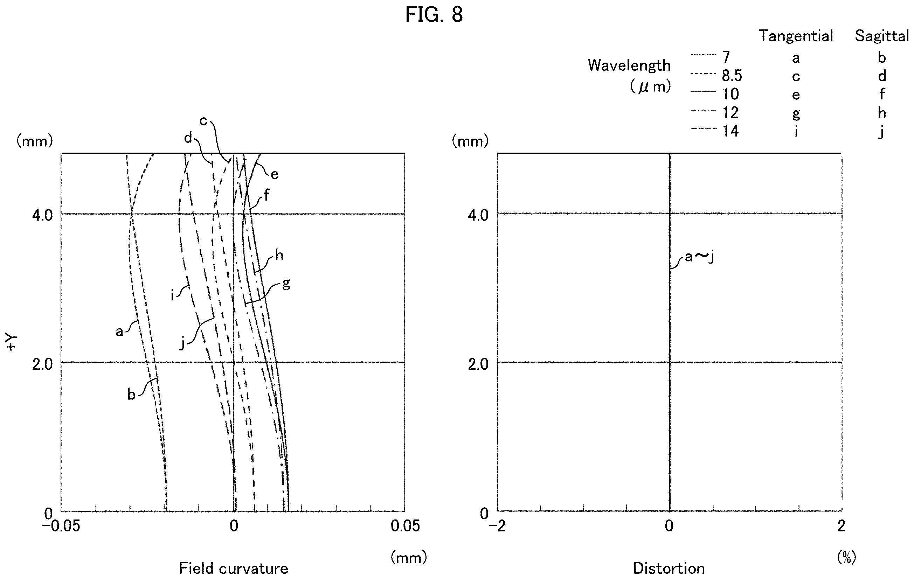

The left side of Fig. 8 is a graph showing, by millimeter, shift amounts (field curvatures) in the tangential direction and the sagittal direction in the wavelength range of 7 pm to 14 pm. The right side of Fig. 8 is a graph showing, by percentage, distortions in the tangential direction at each wavelength. In Fig. 8, a through j each represent a field curvature and a distortion in the tangential direction or the sagittal direction at a wavelength of 7 pm, 8.5 pm, 10 pm, 12 pm, or 14 pm. According to Fig. 8, the shift amounts in the tangential direction and the sagittal direction in the wavelength range of 7 pm to 14 pm are small. Further, the distortions in the tangential direction and the sagittal direction in the wavelength range of 7 pm to 14 pm are extremely small and close to 0%. Thus, it is found that, in the optical system 1 of Example 1, aberration is suppressed.

Moreover, in the optical system 1 of Example 1, the RMS radiuses of the spot diagrams were examined. A result is shown in "Spot diagram" in Table 3 above. In a case where the RMS radiuses of concentrated spots, corresponding to the respective object heights, at wavelengths of 7 pm, 8.5 pm, 10 pm, 12 pm, and 14 pm are all less than 6 pm, "good" is shown. In a case where one or more of the RMS radiuses are not less than 6 pm, "bad" is shown. As shown in Table 3, a good result of the spot diagrams was obtained in the optical system 1 of Example 1.

As has been described, that the optical system 1 has good characteristics (resolution, aberration characteristics) indicates that the first lens unit 2 and the second lens unit 3 have excellent characteristics.

< Example 2>

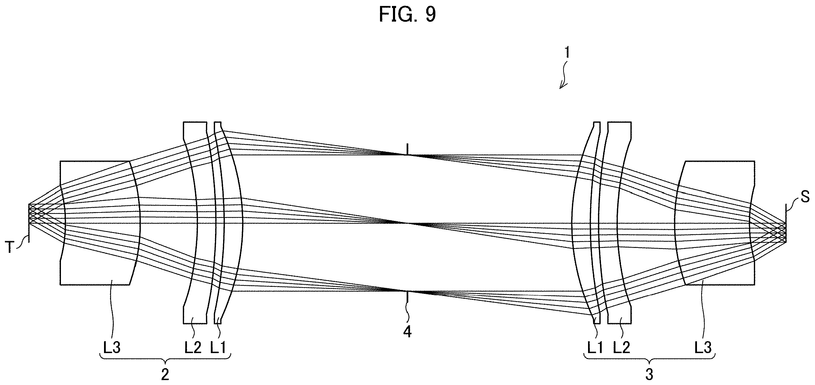

Fig. 9 is a ray diagram obtained by illustrating optical paths on a cross-sectional view of a main part of an optical system 1 of Example 2. Tables 4 and 5 respectively show basic lens data and aspherical surface data of a second lens unit 3 of Example 2. Table 3 above shows t3/φs, t3/d2, d2/d1, φa/φs, an F-number, f, and an NA of the second lens unit 3 of Example 2. Table 3 above further shows results of MTFs and spot diagrams of the optical system 1 of Example 2 which optical system 1 employs lens units of Example 2 as an objective lens (first lens unit 2) and an imaging lens (second lens unit 3). The total length of the optical system 1 of Example 2 is 184 mm.

[Table 4]

| Example 2 | Basic lens data | | | |
|---|---|---|---|---|
| Surface number | Radius of curvature | Distance | Material | Effective diameter |
| 1 (Diaphragm) | ∞ | 40.00 | | 33.0 |
| 2 | 53.611 | 4.50 | G | 46.4 |
| 3 | 107.812 | 2.00 | | 44.0 |
| 4 | 109.466 | 4.50 | CH | 44.0 |
| 5* | 67.355 | 14.00 | | 41.0 |
| 6 | 45.903 | 18.00 | CH | 29.8 |
| 7 | 39.846 | 9.00 | | 18.8 |
| Image plane | ∞ | | | 9.6 |

[Table 5]

| Example 2 | Aspherical surface data |
|---|---|
| Coefficient | Fifth surface |
| $\kappa$ | 0 |

(continued)

| Example 2 | Aspherical surface data |
|---|---|
| Coefficient | Fifth surface |
| A2 | 0 |
| A4 | 7.127535E-07 |
| A6 | 1.263693E-10 |
| A8 | 0 |
| A10 | 0 |

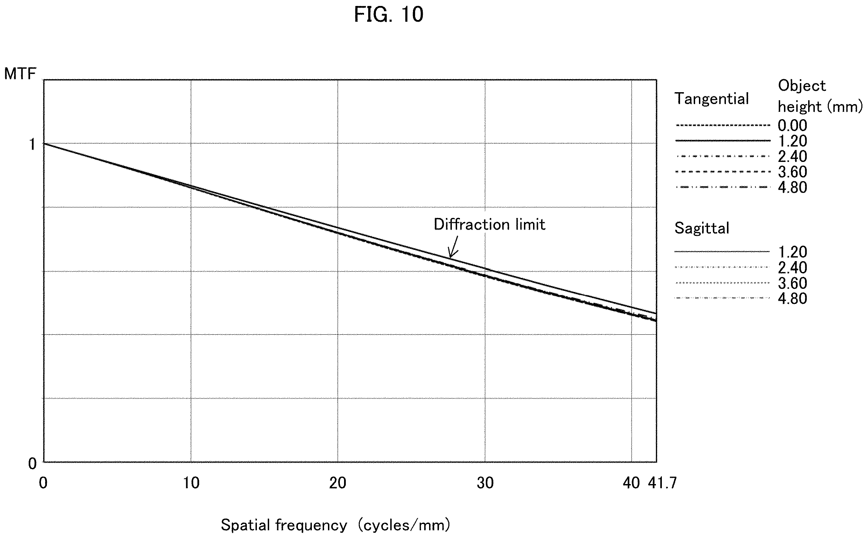

Fig. 10 is a graph showing spatial frequency dependence of the MTFs in a wavelength range of 7 pm to 14 pm. According to Fig. 10, the MTFs of the optical system 1 of Example 2 are each not less than 0.35 at a spatial frequency of 41.7 cycles/mm.

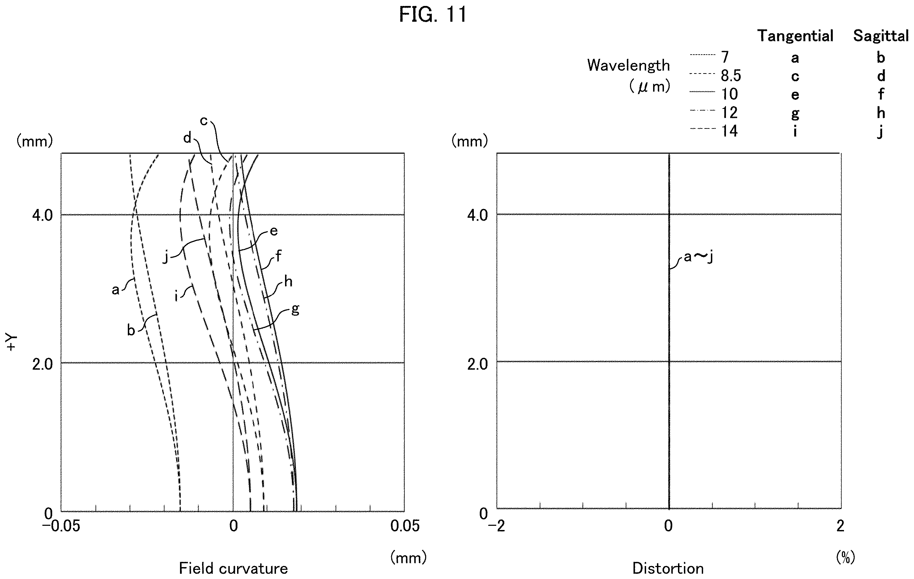

The left side of Fig. 11 is a graph showing, by millimeter, shift amounts (field curvatures) in a tangential direction and a sagittal direction in the wavelength range of 7 pm to 14 pm. The right side of Fig. 11 is a graph showing, by percentage, distortions in the tangential direction at each wavelength. According to Fig. 11, the shift amounts in the tangential direction and the sagittal direction in the wavelength range of 7 pm to 14 pm are small. Further, the distortions in the tangential direction and the sagittal direction in the wavelength range of 7 pm to 14 pm are extremely small and close to 0%. Thus, it is found that, in the optical system 1 of Example 2, aberration is suppressed.

< Example 3>

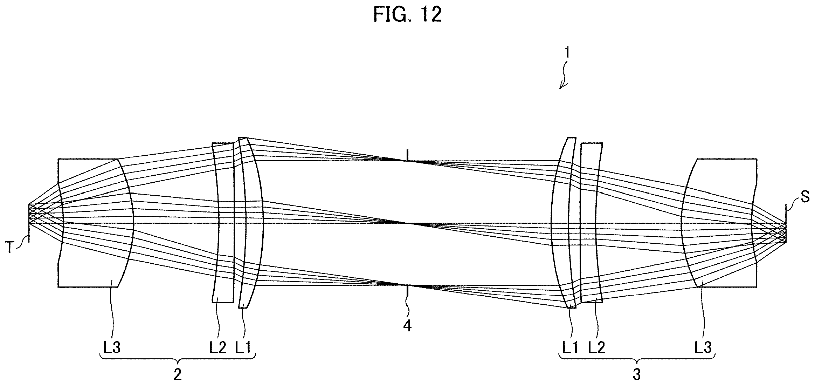

Fig. 12 is a ray diagram obtained by illustrating optical paths on a cross-sectional view of a main part of an optical system 1 of Example 3. Tables 6 and 7 respectively show basic lens data and aspherical surface data of a second lens unit 3 of Example 3. Table 3 above shows t3/φs, t3/d2, d2/d1, φa/φs, an F-number, f, and an NA of the second lens unit 3 of Example 3. Table 3 above further shows results of MTFs and spot diagrams of the optical system 1 of Example 3 which optical system 1 employs lens units of Example 3 as an objective lens (first lens unit 2) and an imaging lens (second lens unit 3). The total length of the optical system 1 of Example 3 is 195 mm.

[Table 6]

| Example 3 | Basic lens data | | | |
|---|---|---|---|---|
| Surface number | Radius of curvature | Distance | Material | Effective diameter |
| 1 (Diaphragm) | ∞ | 37.00 | | 32.0 |
| 2 | 59.280 | 4.50 | G | 43.7 |
| 3 | 123.252 | 3.00 | | 42.6 |
| 4* | 1020.944 | 4.00 | CH | 41.0 |
| 5* | 117.297 | 22.00 | | 39.3 |
| 6* | 34.314 | 18.00 | CH | 33.0 |
| 7* | 33.356 | 9.00 | | 20.1 |
| Image plane | ∞ | | | 9.6 |

[Table 7]

| Example 3 | Aspherical surface data | | | |
|---|---|---|---|---|
| Coefficient | Fourth surface | Fifth surface | Sixth surface | Seventh surface |
| $\kappa$ | 0 | 0 | 0 | 0 |
| A2 | 0 | 0 | 0 | 0 |
| A4 | 3.356928E-07 | 2.440322E-07 | 1.819963E-07 | 3.221109E-06 |
| A6 | -4.507063E-11 | -4.444816E-11 | 8.134734E-12 | -8.676762E-09 |
| A8 | -1.845401E-13 | -2.842570E-13 | 4.476816E-13 | 1.805166E-11 |
| A10 | 0 | 0 | -2.316204E-15 | -3.316243E-13 |

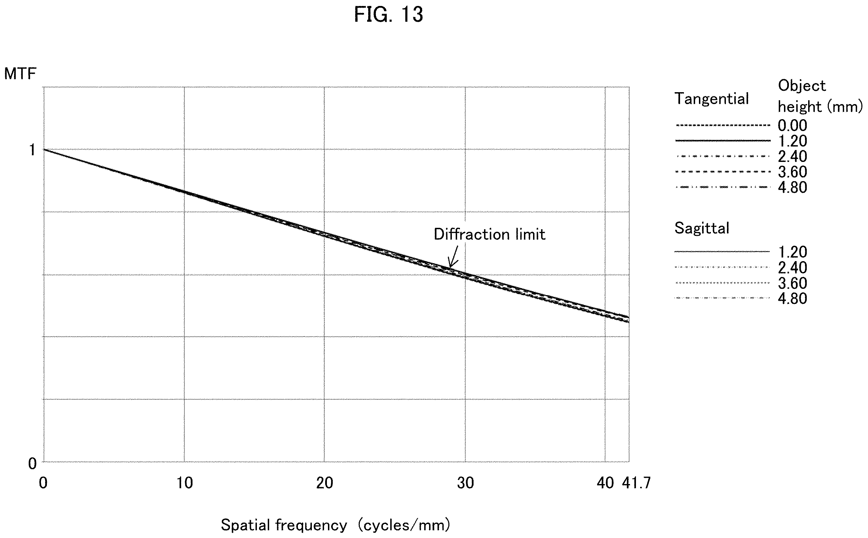

Fig. 13 is a graph showing spatial frequency dependence of the MTFs in a wavelength range of 7 pm to 14 pm. According to Fig. 13, the MTFs of the optical system 1 of Example 3 are each not less than 0.35 at a spatial frequency of 41.7 cycles/mm.

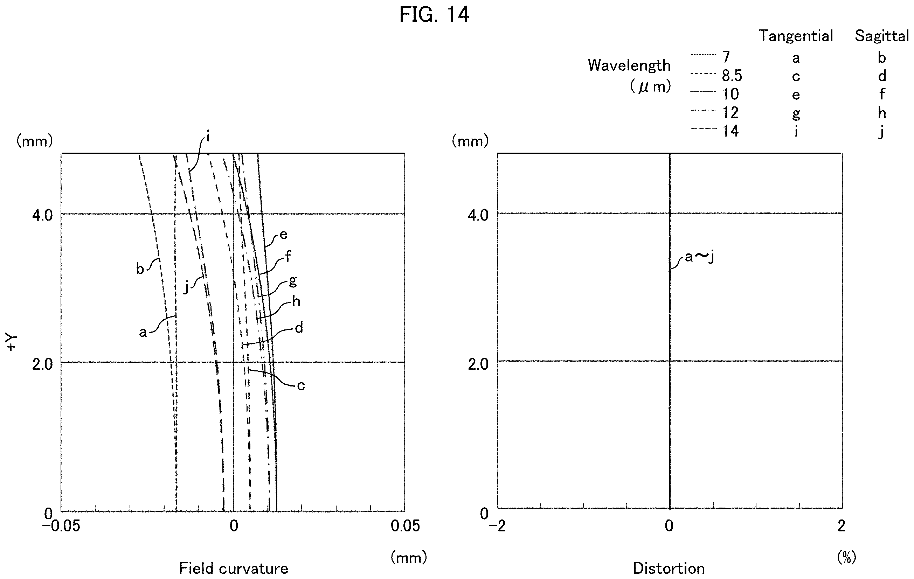

The left side of Fig. 14 is a graph showing, by millimeter, shift amounts (field curvatures) in a tangential direction and a sagittal direction in the wavelength range of 7 $\mu$m to 14 pm. The right side of Fig. 14 is a graph showing, by percentage, distortions in the tangential direction at each wavelength. According to Fig. 14, the shift amounts in the tangential direction and the sagittal direction in the wavelength range of 7 pm to 14 pm are small. Further, the distortions in the tangential direction and the sagittal direction in the wavelength range of 7 pm to 14 pm are extremely small and close to 0%. Thus, it is found that, in the optical system 1 of Example 3, aberration is suppressed.

<Example 4>

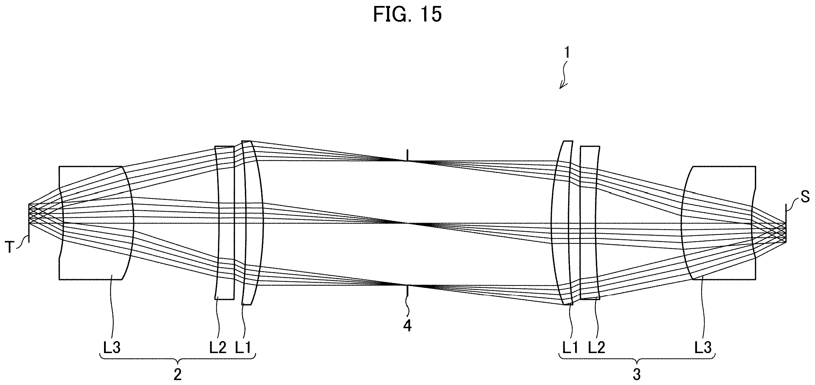

Fig. 15 is a ray diagram obtained by illustrating optical paths on a cross-sectional view of a main part of an optical system 1 of Example 4. Table 8 shows basic lens data of Example 4. Table 3 above shows t3/cps, t3/d2, d2/d1, cpajcps, an F-number, f, and an NA of a second lens unit 3 of Example 4. Table 3 above further shows results of MTFs and spot diagrams of the optical system 1 of Example 4 which optical system 1 employs lens units of Example 4 as an objective lens (first lens unit 2) and an imaging lens (second lens unit 3). Lenses of the second lens unit 3 of Example 4 do not have an aspherical surface. The total length of the optical system 1 of Example 4 is 195 mm.

[Table 8]

| Example 4 | Basic lens data | | | |
|---|---|---|---|---|
| Surface number | Radius of curvature | Distance | Material | Effective diameter |
| 1 (Diaphragm) | ∞ | 37.00 | | 32.0 |
| 2 | 73.087 | 4.50 | G | 42.1 |
| 3 | 192.576 | 3.00 | | 41.2 |
| 4 | 119701.000 | 4.00 | CH | 39.3 |
| 5 | 191.876 | 22.00 | | 38.1 |
| 6 | 38.953 | 18.00 | CH | 28.9 |
| 7 | 34.350 | 9.00 | | 17.8 |
| Image plane | ∞ | | | 9.7 |

<Example 5>

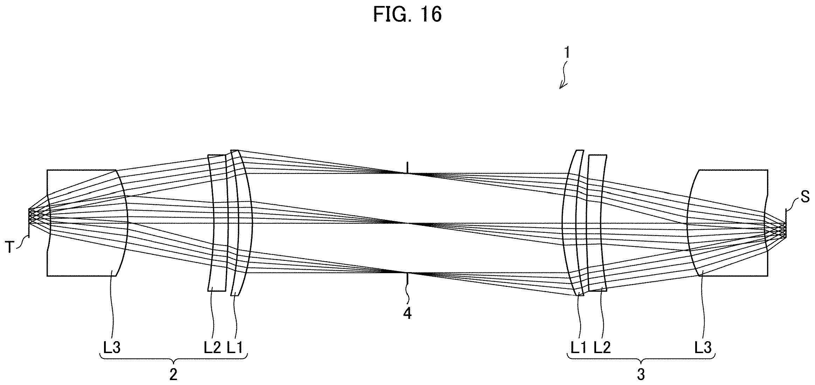

Fig. 16 is a ray diagram obtained by illustrating optical paths on a cross-sectional view of a main part of an optical system 1 of Example 5. Tables 9 and 10 respectively show basic lens data and aspherical surface data of a second lens unit 3 of Example 5. Table 3 above shows t3/$\varphi$s, t3/d2, d2/d1, $\varphi$a/$\varphi$s, an F-number, f, and an NA of the second lens unit 3 of Example 5. Table 3 above further shows results of MTFs and spot diagrams of the optical system 1 of Example 5 which optical system 1 employs lens units of Example 5 as an objective lens (first lens unit 2) and an imaging lens (second lens unit 3). The total length of the optical system 1 of Example 5 is 245 mm.

[Table 9]

| Example 5 | Basic lens data | | | |
|---|---|---|---|---|
| Surface number | Radius of curvature | Distance | Material | Effective diameter |
| 1 (Diaphragm) | ∞ | 50.00 | | 32.0 |
| 2 | 61.170 | 4.50 | G | 46.9 |
| 3 | 106.810 | 3.50 | | 45.6 |
| 4* | 315.372 | 4.50 | CH | 44.0 |
| 5* | 114.806 | 28.00 | | 42.0 |
| 6* | 40.822 | 25.00 | CH | 34.1 |
| 7* | 37.615 | 7.00 | | 18.3 |
| Image plane | ∞ | | | 9.6 |

[Table 10]

| Example 5 | Aspherical surface data | | | |
|---|---|---|---|---|
| Coefficient | Fourth surface | Fifth surface | Sixth surface | Seventh surface |
| $\kappa$ | 0 | 0 | 0 | 0 |
| A2 | 0 | 0 | 0 | 0 |
| A4 | 2.582082E-07 | 3.126138E-07 | -4.425896E-07 | -5.608176E-06 |
| A6 | -7.594670E-10 | -9.626130E-10 | -3.066738E-10 | -9.457386E-09 |
| A8 | 1.795998E-12 | 2.645816E-12 | 8.195477E-13 | 4.929964E-11 |
| A10 | -2.017857E-15 | -3.303396E-15 | -2.131194E-15 | -5.504742E-13 |

<Example 6>

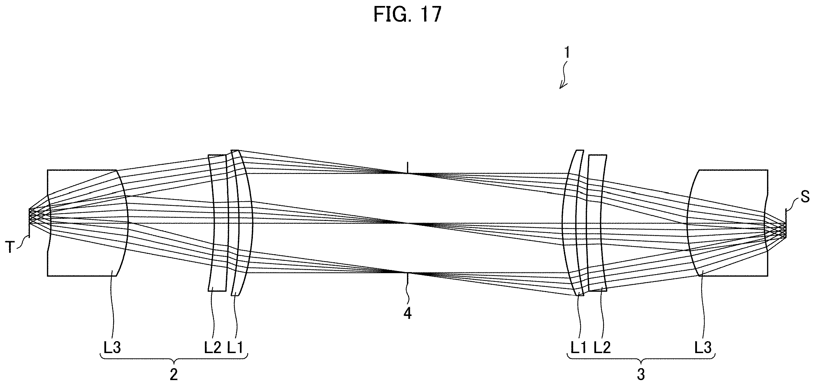

Fig. 17 is a ray diagram obtained by illustrating optical paths on a cross-sectional view of a main part of an optical system 1 of Example 6. Tables 11 and 12 respectively show basic lens data and aspherical surface data of a second lens unit 3 of Example 6. Table 3 above shows t3/φs, t3/d2, d2/d1, φa/φs, an F-number, f, and an NA of the second lens unit 3 of Example 7. Table 3 above further shows results of MTFs and spot diagrams of the optical system 1 of Example 6 which optical system 1 employs lens units of Example 6 as an objective lens (first lens unit 2) and an imaging lens (second lens unit 3). The total length of the optical system 1 of Example 6 is 245 mm.

[Table 11]

| Example 6 | Basic lens data | | | |
|---|---|---|---|---|
| Surface number | Radius of curvature | Distance | Material | Effective diameter |
| 1 (Diaphragm) | $\infty$ | 50.00 | | 32.0 |
| 2 | 59.843 | 4.50 | G | 47.0 |
| 3 | 102.735 | 3.50 | | 45.7 |
| 4* | 280.377 | 4.50 | CH | 44.1 |
| 5* | 108.216 | 28.00 | | 42.1 |
| 6* | 40.720 | 25.00 | CH | 34.2 |
| 7* | 38.028 | 7.00 | | 18.3 |
| Image plane | $\infty$ | | | 9.6 |

[Table 12]

| Example 6 | Aspherical surface data | | | |
|---|---|---|---|---|
| Coefficient | Fourth surface | Fifth surface | Sixth surface | Seventh surface |
| $\kappa$ | 0 | 0 | 0 | 0 |
| A2 | 0 | 0 | 0 | 0 |
| A4 | -1.574997E-07 | -1.897424E-07 | -5.145472E-07 | -5.338938E-06 |
| A6 | 0 | 0 | -6.439937E-11 | -2.240402E-09 |
| A8 | 0 | 0 | 0 | 0 |
| A10 | 0 | 0 | 0 | 0 |

<Example 7>

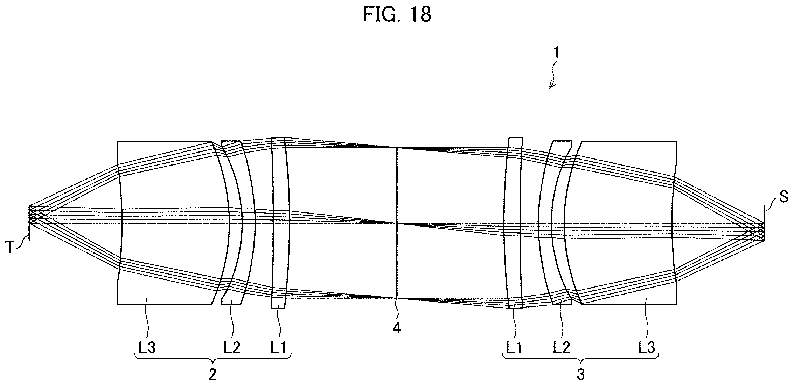

Fig. 18 is a ray diagram obtained by illustrating optical paths on a cross-sectional view of a main part of an optical system 1 of Example 7. Tables 13 and 14 respectively show basic lens data and aspherical surface data of a second lens unit 3 of Example 7. Table 3 above shows t3/φs, t3/d2, d2/d1, φa/φs, an F-number, f, and an NA of the second lens unit 3 of Example 7. Table 3 above further shows results of MTFs and spot diagrams of the optical system 1 of Example 7 which optical system 1 employs lens units of Example 7 as an objective lens (first lens unit 2) and an imaging lens (second lens unit 3). The total length of the optical system 1 of Example 7 is 213.4 mm.

[Table 13]

| Example 7 | Basic lens data | | | |
|---|---|---|---|---|
| Surface number | Radius of curvature | Distance | Material | Effective diameter |
| 1 (Diaphragm) | ∞ | 30.00 | | 42.0 |
| 2 | 188.967 | 4.50 | CH | 47.3 |
| 3 | 457.694 | 5.00 | | 46.9 |
| 4* | 71.196 | 3.60 | CH | 45.2 |
| 5* | 45.508 | 3.60 | | 42.4 |
| 6 | 57.013 | 34.00 | G | 44.9 |
| 7 | 97.160 | 26.00 | | 31.0 |
| Image plane | ∞ | | | 9.6 |

[Table 14]

| Example 7 | Aspherical surface data | |
|---|---|---|
| Coefficient | Fourth surface | Fifth surface |
| $\kappa$ | 0 | 0 |
| A2 | 0 | 0 |
| A4 | 3.417494E-07 | 5.034096E-07 |
| A6 | 0 | 0 |
| A8 | 0 | 0 |
| A10 | 0 | 0 |

<Example 8>

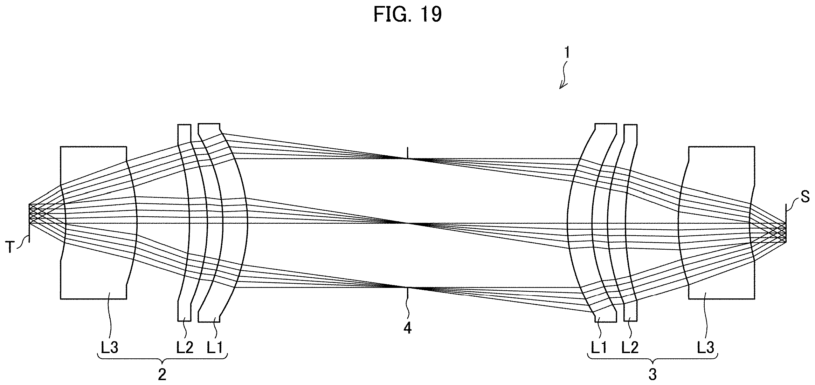

Fig. 19 is a ray diagram obtained by illustrating optical paths on a cross-sectional view of a main part of an optical system 1 of Example 8. Tables 15, 16, and 17 show basic lens data and diffraction surface data of a second lens unit 3 of Example 8. Table 3 above shows t3/$\varphi$s, t3/d2, d2/d1, $\varphi$a/$\varphi$s, an F-number, f, and an NA of the second lens unit 3 of Example 8. Table 3 above further shows results of MTFs and spot diagrams of the optical system 1 of Example 8 which optical system 1 employs lens units of Example 8 as an objective lens (first lens unit 2) and an imaging lens (second lens unit 3). The total length of the optical system 1 of Example 8 is 189 mm.

[Table 15]

| Example 8 | Basic lens data | | | |
|---|---|---|---|---|
| Surface number | Radius of curvature | Distance | Material | Effective diameter |
| 1 (Diaphragm) | ∞ | 40.00 | | 32.0 |
| 2 | 42.652 | 6.00 | G | 46.4 |
| 3 | 41.730 | 4.00 | | 44.0 |
| 4* (Diffraction surface) | 50.850 | 4.50 | CH | 41.0 |
| 5 | 69.889 | 13.00 | | 39.0 |
| 6 | 44.326 | 18.00 | CH | 31.0 |
| 7 | 37.765 | 9.00 | | 20.0 |
| Image plane | ∞ | | | 9.6 |

As shown in Table 15, in Example 8, a first lens L1 is made of germanium, and a second lens L2 and a third lens L3 are each made of chalcogenide glass. A fourth surface of the second lens L2 is a diffraction surface.

[Table 16]

| Example 8 | Aspherical surface data |
|---|---|
| Coefficient | Fourth surface |
| $\kappa$ | 0 |
| A2 | 0 |
| A4 | -6.421421E-07 |
| A6 | -3.278357E-10 |
| A8 | 0 |
| A10 | 0 |

[Table 17]

| Example 8 | Diffraction surface data |
|---|---|
| Coefficient | Fourth surface |
| P1 | -696.16961 |
| P2 | -57.56012 |

The definition of a diffraction surface shape is as follows:

$$\Phi = P1 \times (h/h_n)^2 + P2 \times (h/h_n)^4$$

$\Phi$: Phase difference function [rad]
P1, P2: Phase coefficient
h: Distance from optical axis
$h_n$: Normalized radius [mm] ($h_n$=1, unless otherwise specified)

$$Zs = MOD(\Phi \times \lambda/(2\pi), -\lambda)/(N-1)$$

Zs: Sag amount of diffraction surface
MOD: Remainder function
N: Refractive index at designed dominant wavelength
$\lambda$: Designed dominant wavelength (10 pm)

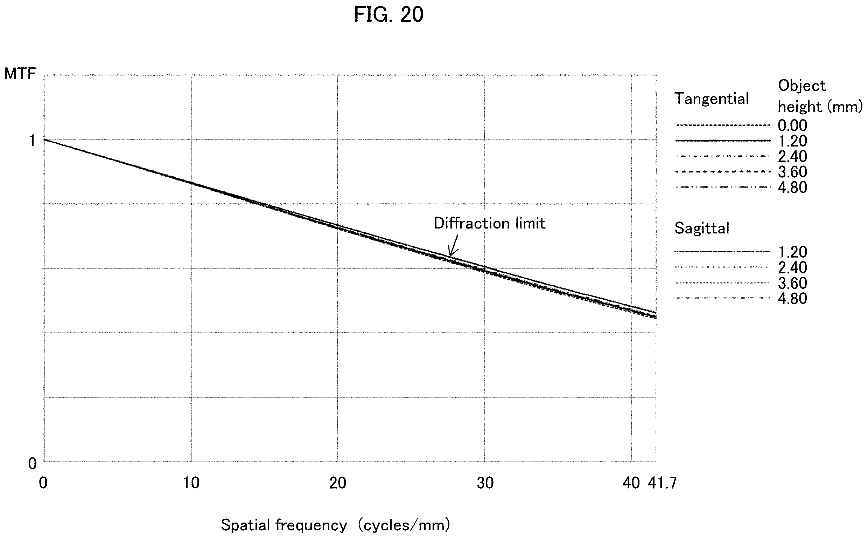

Fig. 20 is a graph showing spatial frequency dependence of the MTFs in a wavelength range of 7 pm to 14 pm. According to Fig. 20, the MTFs of the optical system 1 of Example 8 are each not less than 0.35 at a spatial frequency of 41.7 cycles/mm.

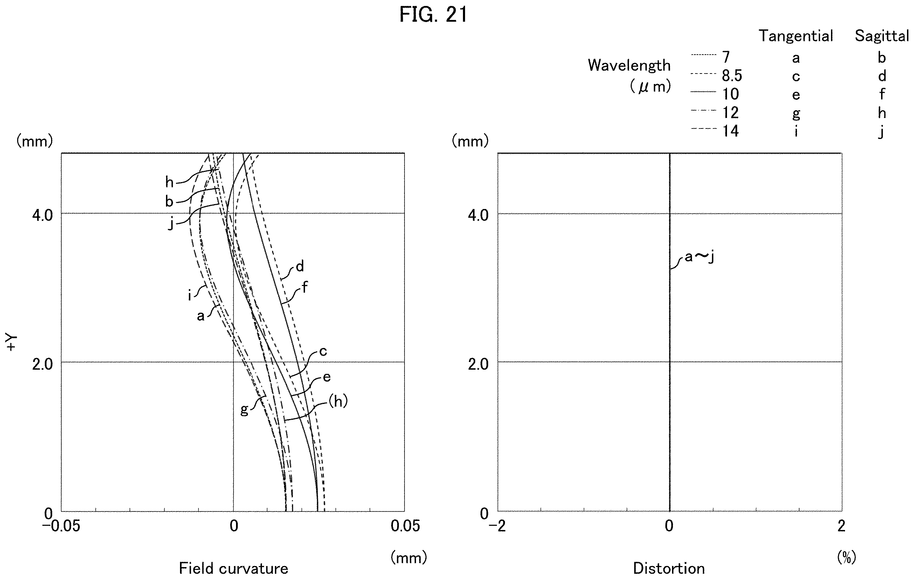

The left side of Fig. 21 is a graph showing, by millimeter, field curvatures in a tangential direction and a sagittal direction in the wavelength range of 7 pm to 14 pm. The right side of Fig. 21 is a graph showing, by percentage, distortions in the tangential direction at each wavelength. According to Fig. 21, shift amounts in the tangential direction and the sagittal direction in the wavelength range of 7 pm to 14 pm are small. Further, the distortions in the tangential direction and the sagittal direction in the wavelength range of 7 pm to 14 pm are extremely small and close to 0%. Thus, it is found that, in the optical system 1 of Example 8, aberration is suppressed.

<Example 9>

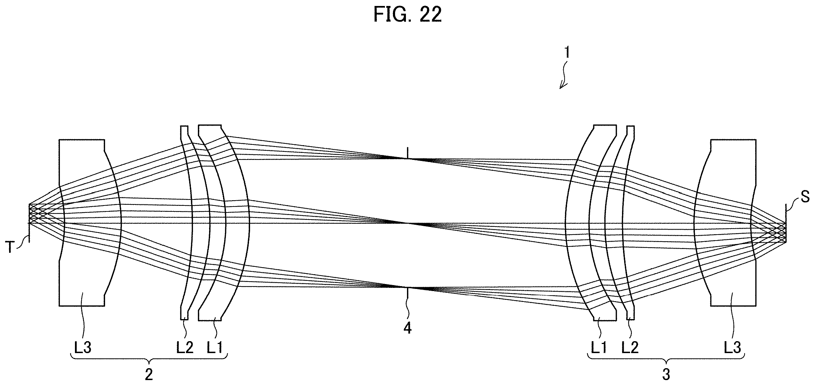

Fig. 22 is a ray diagram obtained by illustrating optical paths on a cross-sectional view of a main part of an optical system 1 of Example 9. Tables 18, 19, and 20 show basic lens data and diffraction surface data of a second lens unit 3 of Example 9. Table 3 above shows t3/φs, t3/d2, d2/d1, φa/φs, an F-number, f, and an NA of the second lens unit 3 of Example 9. Table 3 above further shows results of MTFs and spot diagrams of the optical system 1 of Example 9 which optical system 1 employs lens units of Example 9 as an objective lens (first lens unit 2) and an imaging lens (second lens unit 3). The total length of the optical system 1 of Example 9 is 191.6 mm.

[Table 18]

| Example 9 | Basic lens data | | | |
|---|---|---|---|---|
| Surface number | Radius of curvature | Distance | Material | Effective diameter |
| 1 (Diaphragm) | ∞ | 40.00 | | 32.0 |
| 2 | 43.524 | 6.00 | G | 48.0 |
| 3 | 38.603 | 4.00 | | 44.0 |
| 4 | 47.266 | 4.50 | CH | 45.0 |
| 5*(Diffraction surface) | 79.453 | 18.00 | | 42.0 |
| 6 | 40.094 | 14.30 | CH | 36.0 |
| 7 | 33.843 | 9.00 | | 20.0 |
| Image plane | ∞ | | | 9.6 |

As shown in Table 18, in Example 9, a first lens L1 is made of germanium, and a second lens L2 and a third lens L3 are each made of chalcogenide glass. A fifth surface of the second lens L2 is a diffraction surface.

[Table 19]

| Example 9 | Aspherical surface data |
|---|---|
| Coefficient | Fifth surface |
| $\kappa$ | 0 |
| A2 | 0 |
| A4 | 5.399270E-07 |
| A6 | 1.168815E-11 |
| A8 | 0 |
| A10 | 0 |

[Table 20]

| Example 9 | Diffraction surface data |
|---|---|
| Coefficient | Fifth surface |
| P1 | -943.69016 |
| P2 | 392.78661 |

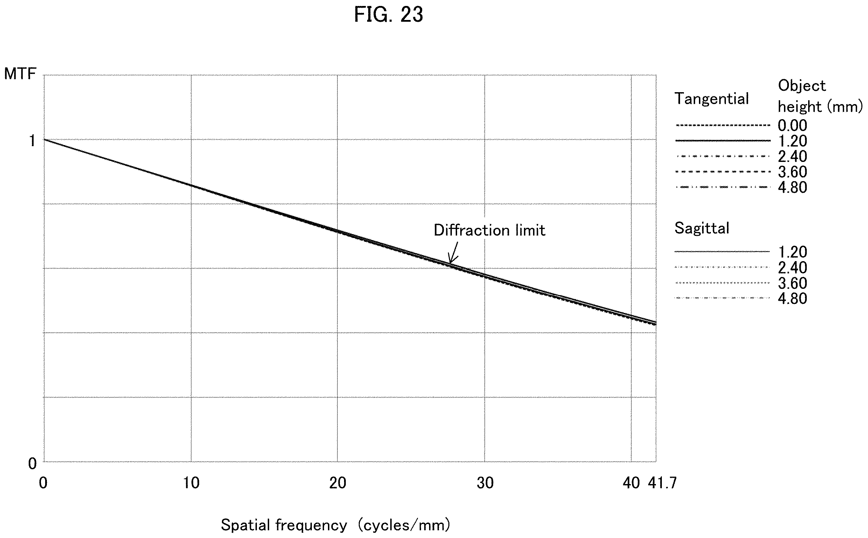

Fig. 23 is a graph showing spatial frequency dependence of the MTFs in a wavelength range of 7 pm to 14 pm. According to Fig. 23, the MTFs of the optical system 1 of Example 9 are each not less than 0.35 at a spatial frequency of 41.7 cycles/mm.

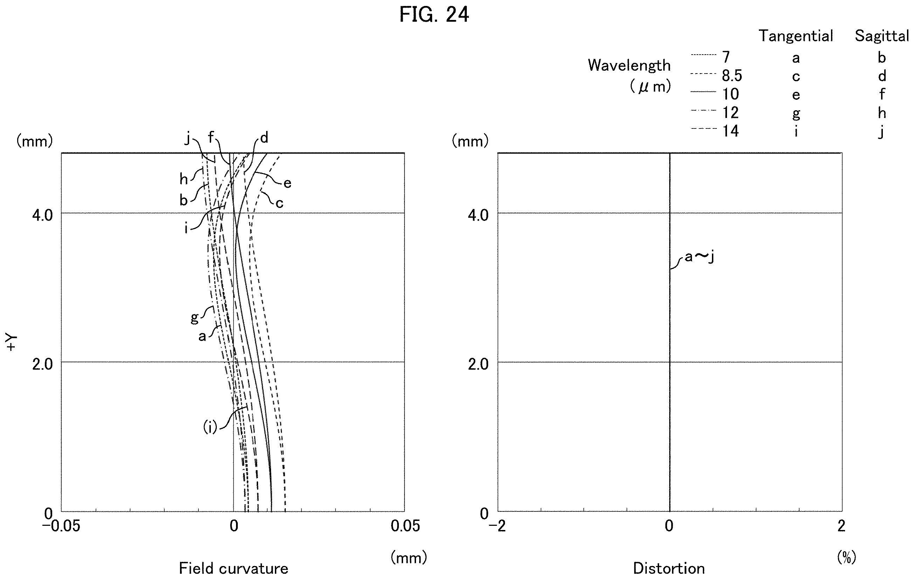

The left side of Fig. 24 is a graph showing, by millimeter, field curvatures in a tangential direction and a sagittal direction in the wavelength range of 7 pm to 14 pm. The right side of Fig. 24 is a graph showing, by percentage, distortions in the tangential direction at each wavelength. According to Fig. 24, shift amounts in the tangential direction and the sagittal direction in the wavelength range of 7 pm to 14 pm are small. Further, the distortions in the tangential direction and the sagittal direction in the wavelength range of 7 pm to 14 pm are extremely small and close to 0%. Thus, it is found that, in the optical system 1 of Example 9, aberration is suppressed.

According to Figs. 7, 20, and 23 and Table 3, it is found that the MTFs at the wavelengths of 7 pm to 14 pm are improved in Examples 8 and 9, each of which has a diffraction surface, as compared with Example 1, which does not have a diffraction surface.

<Axial chromatic aberration>

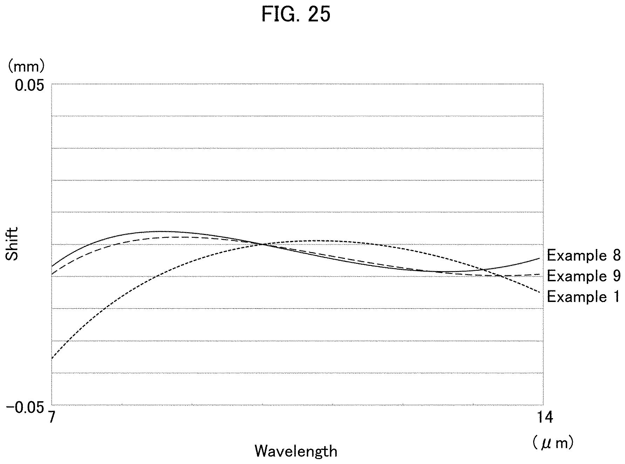

Fig. 25 is a graph showing axial chromatic aberration in the wavelength range of 7 pm to 14 pm with regard to Examples 1, 8, and 9. It is found that, as compared with Example 1 which does not have a diffraction surface, Examples 8 and 9 each of which has a diffraction surface have improved axial chromatic aberration.

<Comparative Example 1>

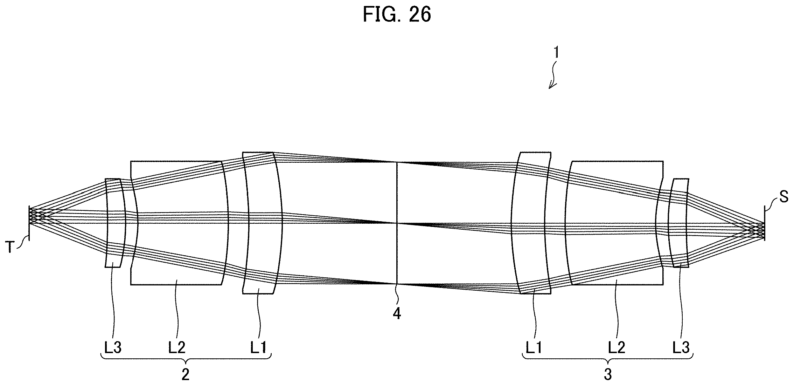

Fig. 26 is a ray diagram obtained by illustrating optical paths on a cross-sectional view of a main part of an optical system of Comparative Example 1. Tables 21 and 22 respectively show basic lens data and aspherical surface data of a second lens unit of Comparative Example 1. Table 3 above shows t3/$\varphi$s, t3/d2, d2 / d 1, $\varphi$a/$\varphi$s, an F-number, f, and an NA of the second lens unit of Comparative Example 1. Table 3 above further shows results of MTFs and spot diagrams of the optical system of Comparative Example 1 which optical system employs lens units of Comparative Example 1 as an objective lens (first lens unit) and an imaging lens (second lens unit). The total length of the optical system of Comparative Example 1 is 244 mm.

[Table 21]

| Comparative Example 1 | Basic lens data | | | |
|---|---|---|---|---|
| Surface number | Radius of curvature | Distance | Material | Effective diameter |
| 1 (Diaphragm) | ∞ | 38.00 | | 40.0 |
| 2 | 90.183 | 11.00 | G | 46.7 |
| 3 | 119.197 | 6.80 | | 43.1 |
| 4* | 87.710 | 30.00 | CH | 40.7 |
| 5* | 42.042 | 4.20 | | 28.1 |
| 6 | 57.967 | 6.00 | G | 29.0 |
| 7 | 134.414 | 26.00 | | 27.4 |
| Image plane | ∞ | | | 9.6 |

[Table 22]

| Comparative Example 1 | Aspherical surface data | |
|---|---|---|
| Coefficient | Fourth surface | Fifth surface |
| $\kappa$ | 0 | 0 |
| A2 | 0 | 0 |
| A4 | -3.092342E-07 | -4.747930E-07 |
| A6 | 0 | 0 |
| A8 | 0 | 0 |
| A10 | 0 | 0 |

As shown in Table 21, in Comparative Example 1, a first lens L1 and a third lens L3 are each made of germanium, and a second lens L2 is made of chalcogenide glass. The optical axis thickness of the second lens L2 is greater than the optical axis thickness of each of the first lens L1 and the third lens L3, and the effective diameter of the first lens L1 is larger than the effective diameter of the third lens L3.

<Comparative Example 2>

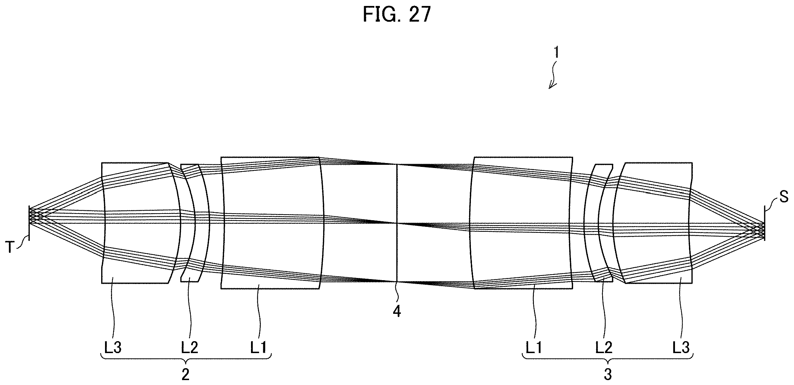

Fig. 27 is a ray diagram obtained by illustrating optical paths on a cross-sectional view of a main part of an optical system 1 of Comparative Example 2. Tables 23 and 24 respectively show basic lens data and aspherical surface data of a second lens unit of Comparative Example 2. Table 3 above shows t3/$\varphi$s, t3/d2, d2 / d 1, $\varphi$a/$\varphi$s, an F-number, f, and an NA of the second lens unit of Comparative Example 2. Table 3 above further shows results of MTFs and spot diagrams of the optical system of Comparative Example 2 which optical system employs lens units of Comparative Example 2 as an objective lens (first lens unit) and an imaging lens (second lens unit). The total length of the optical system of Comparative Example 2 is 252 mm.

[Table 23]

| Comparative Example 2 | | Basic lens data | | |
| --- | --- | --- | --- | --- |
| Surface number | Radius of curvature | Distance | Material | Effective diameter |
| 1 (Diaphragm) | ∞ | 25.00 | | 40.0 |
| 2* | 157.759 | 34.00 | CH | 44.7 |
| 3* | 178.635 | 5.00 | | 39.8 |
| 4* | 54.797 | 5.00 | CH | 40.0 |
| 5* | 37.298 | 5.00 | | 36.4 |
| 6 | 52.348 | 26.00 | G | 41.1 |
| 7 | 113.821 | 26.00 | | 31.5 |
| Image plane | ∞ | | | 9.7 |

[Table 24]

| Comparative Example 2 | | Aspherical surface data | | |
| --- | --- | --- | --- | --- |
| Coefficient | Second surface | Third surface | Fourth surface | Fifth surface |
| $\kappa$ | 0 | 0 | 0 | 0 |
| A2 | 0 | 0 | 0 | 0 |
| A4 | -1.152551E-07 | -2.241311E-07 | 1.051378E-06 | 1.488417E-06 |
| A6 | 0 | 0 | 0 | 0 |
| A8 | 0 | 0 | 0 | 0 |
| A10 | 0 | 0 | 0 | 0 |

As shown in Table 23, in Comparative Example 2, a third lens L3 is made of germanium, and a first lens L1 and a second lens L2 are each made of chalcogenide glass. The optical axis thickness of the first lens L1 is greater than the optical axis thickness of each of the second lens L2 and the third lens L3, and the effective diameter of the first lens L1 is larger than the effective diameter of the third lens L3.

<Comparative Example 3>

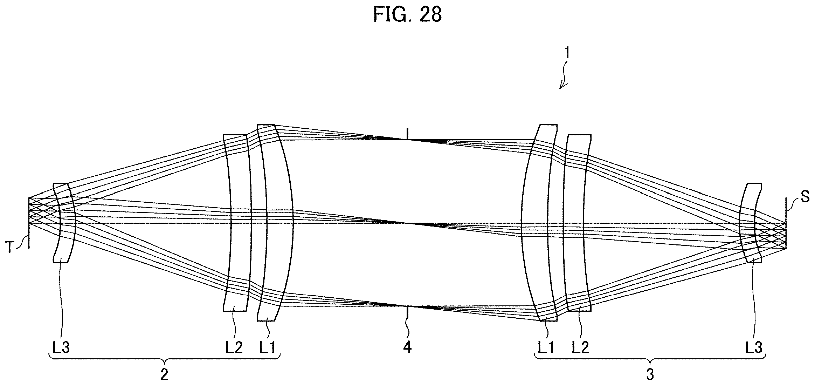

Fig. 28 is a ray diagram obtained by illustrating optical paths on a cross-sectional view of a main part of an optical system 1 of Comparative Example 3. Tables 25 and 26 respectively show basic lens data and aspherical surface data of a second lens unit of Comparative Example 3. Table 3 above shows t3/φs, t3/d2, d2/d1, φa/φs, an F-number, f, and an NA of the second lens unit of Comparative Example 3. Table 3 above further shows results of MTFs and spot diagrams of the optical system of Comparative Example 3 which optical system employs lens units of Comparative Example 3 as an objective lens (first lens unit) and an imaging lens (second lens unit 3). The total length of the optical system of Comparative Example 3 is 145.9 mm.

[Table 25]

| Comparative Example 3 | | Basic lens data | | |
| --- | --- | --- | --- | --- |
| Surface number | Radius of curvature | Distance | Material | Effective diameter |
| 1 (Diaphragm) | ∞ | 22.00 | | 32.0 |
| 2 | 50.663 | 5.00 | G | 37.7 |
| 3 | 89.961 | 3.00 | | 36.0 |
| 4* | 304.227 | 3.94 | CH | 33.9 |
| 5* | 132.899 | 29.99 | | 31.7 |
| 6* | 17.595 | 2.99 | CH | 15.2 |
| 7* | 16.764 | 6.00 | | 13.2 |
| Image plane | ∞ | | | 10.0 |

[Table 26]

| Comparative Example 3 | Aspherical surface data | | | |
|---|---|---|---|---|
| Coefficient | Fourth surface | Fifth surface | Sixth surface | Seventh surface |
| $\kappa$ | 0 | 0 | 0 | 0 |
| A2 | 0 | 0 | 0 | 0 |
| A4 | 6.661207E-06 | 7.828220E-06 | -3.009557E-05 | -4.661274E-05 |
| A6 | 6.661207E-06 | -3.966742E-09 | -1.083390E-07 | -2.188570E-07 |
| A8 | 8.714274E-12 | 9.658302E-12 | -1.131675E-10 | 2.334628E-09 |
| A10 | -6.056667E-15 | -2.798128E-15 | 2.417329E-11 | 6.583323E-11 |

As shown in Table 25, in Comparative Example 3, a first lens L1 is made of germanium, and a second lens L2 and a third lens L3 are each made of chalcogenide glass. The optical axis thickness of the first lens L1 is greater than the optical axis thickness of each of the second lens L2 and the third lens L3, and the effective diameter of the first lens L1 is larger than the effective diameter of the third lens L3.

<Consideration>

As described above, the optical systems 1 of Examples 1 through 9 each have a high NA on the image side and have good resolution while aberration is suppressed. Moreover, it was confirmed that the optical systems 1 of Examples 1 through 9 each have a high MTF at the spatial frequency of 41.7 cycles/mm and have such good resolution as to be used for an image sensor having a pixel pitch of approximately 12 pm. Therefore, in a case where each of the optical systems 1 in accordance with the examples of the present invention is applied to a spectral characteristic measurement device 10, it is possible to obtain a waveform of a clear and well resolved interferogram.

In contrast, in the optical system of Comparative Example 1, the optical axis thickness of the second lens L2 is greater than the optical axis thickness of each of the first lens L1 and the third lens L3. In each of the optical systems of Comparative Examples 2 and 3, the optical axis thickness of the first lens L1 is greater than the optical axis thickness of each of the second lens L2 and the third lens L3. Therefore, the NA on the image side of each of the optical systems of Comparative Examples 1 and 3 is less than 0.4, and the MTF at the spatial frequency of 41.7 cycles/mm of each of the optical systems of Comparative Examples 1 through 3 is lower than 0.35. Therefore, each of the optical systems of Comparative Examples 1 through 3 has poor resolution, and it is not possible to obtain a waveform of a clear interferogram in a case where each of the optical systems of Comparative Examples 1 through 3 is applied to a spectral characteristic measurement device 10.

By a comparison of Examples 1 through 6, 8, and 9 with Example 7, it is found that a higher MTF is obtained in a case where the third lens L3 is made of chalcogenide glass than in a case where the third lens L3 is made of germanium. Further, t3/d2 is preferably 0.5 to 2, and d2/d1 is preferably higher than 1.

By a comparison of Examples 1 through 9 with Comparative Examples 1 through 3, it is found that d2/d1 is preferably not more than 9. Further, t3/cps is preferably 1 to 4, and φa/φs is preferably 3 to 5 and more preferably 3 to 4.5.

As described above, as compared with Example 1 which does not have a diffraction surface, Examples 8 and 9 each of which has a diffraction surface have improved axial chromatic aberration.

< Recap>

A lens unit in accordance with a first aspect of the present invention is a lens unit which includes a first lens, a second lens, and a third lens that are disposed in order and which is used for an infrared region that includes at least any one of wavelengths in a range of 7 pm to 14 pm, wherein an effective diameter of the first lens is larger than an effective diameter of the third lens, and an optical axis thickness of the third lens is greater than an optical axis thickness of any one of the first lens and the second lens. According to the above configuration, the lens unit has good resolution. In a case where the lens unit is applied to a spectral characteristic measurement device, it is possible to obtain a clear interferogram.

The lens unit in accordance with a second aspect of the present invention is arranged such that, in the first aspect, the optical axis thickness of the third lens is 0.5 times to 2 times a second distance which is a distance on an optical axis between the second lens and the third lens. According to the above configuration, an NA on an image side becomes high, and it is possible to suppress an expansion of an RMS radius. Moreover, it is possible to reduce chromatic aberration.

The lens unit in accordance with a third aspect of the present invention is arranged such that, in the first or second aspect, a first distance which is a distance on an optical axis between the first lens and the second lens is shorter than a second distance which is a distance on the optical axis between the second lens and the third lens. According to the above configuration, the NA on the image side becomes high, and it is possible to reduce chromatic aberration.

The lens unit in accordance with a fourth aspect of the present invention is arranged such that, in the third aspect, a ratio of the second distance to the first distance is not more than 9.

The lens unit in accordance with a fifth aspect of the present invention is arranged such that, in any one of the first through fourth aspects, the third lens is made of chalcogenide glass which has a refractive index of 2.5 to 4.0 at a wavelength of 10 pm. According to the above configuration, the third lens has a high transmittance.

The lens unit in accordance with the sixth aspect of the present invention is arranged such that, in the fifth aspect, the second lens is made of chalcogenide glass which has a refractive index of 2.5 to 4.0 at a wavelength of 10 pm. According to the above configuration, the second lens has a high transmittance.

The lens unit in accordance with a seventh aspect of the present invention is arranged such that, in the fifth or sixth aspect, the first lens is made of germanium. According to the above configuration, the first lens has good durability and good hardness.

The lens unit in accordance with an eighth aspect of the present invention is arranged such that, in any one of the first through seventh aspects, the first lens has positive power and has a meniscus shape in which a second lens side of the first lens is concave; the second lens has negative power; and the third lens has positive power and has a meniscus shape in which a second lens side of the third lens is convex. In this case, the lens unit becomes compact.

The lens unit in accordance with a ninth aspect of the present invention is arranged so as to, in any one of the first through eighth aspects, include a diaphragm that is located to a side of the first lens which side is opposite from the second lens in a direction of an optical axis.

The lens unit in accordance with a tenth aspect of the present invention is arranged such that, in the ninth aspect, a ratio of a diameter of the diaphragm to an effective diameter of an image is 3 to 5. According to the above configuration, the NA on the image side becomes high.

The lens unit in accordance with an eleventh aspect of the present invention is arranged such that, in any one of the first through tenth aspects, the third lens is made of a material which has, at a wavelength of 10 pm, an internal transmittance that is equal to or higher than an internal transmittance of a material of which the second lens is made and that is equal to or higher than an internal transmittance of a material of which the first lens is made. According to the above configuration, an image has good resolution.

The lens unit in accordance with a twelfth aspect of the present invention is arranged such that, in any one of the first through eleventh aspects, the second lens has a diffraction surface. According to the above configuration, chromatic aberration is easily reduced.

The lens unit in accordance with a thirteenth aspect of the present invention is arranged such that, in the twelfth aspect, a level difference between a concave and a convex of the diffraction surface is 1 pm to 10 pm. According to the above configuration, chromatic aberration is more easily reduced.

The lens unit in accordance with a fourteenth aspect of the present invention is arranged such that, in any one of the first through thirteenth aspects, at least one surface of the first lens is a spherical surface. According to the above configuration, it is possible to suppress a deterioration of optical characteristics even in a case where a tilt error is caused during assembly of the first lens.

The lens unit in accordance with a fifteenth aspect of the present invention is arranged such that, in any one of the first through fourteenth aspects, both surfaces of the first lens are spherical lenses. Similarly, it is possible to suppress a deterioration of the optical characteristics.

The lens unit in accordance with a sixteenth aspect of the present invention is arranged such that, in any one of the first through fifteenth aspects, at least one surface of the second lens or the third lens is an aspherical surface, or at least one surface of each of the second lens and the third lens is an aspherical surface. Typically, the second lens and the third lens are disposed at respective positions at each of which misalignment is unlikely to occur. Therefore, a tilt is unlikely to occur when each of the second lens and the third lens is mounted on a lens barrel. Thus, even in a case where at least one of the second lens and the third lens has an aspherical surface, a deterioration of resolution which deterioration is caused by a slight tilt error or decenter error during assembly of each of the lenses is unlikely to be induced.

The lens unit in accordance with a seventeenth aspect of the present invention is arranged such that, in any one of the first through sixteenth aspects, a surface of the third lens which surface is located on a side opposite from a side that faces the second lens is an aspherical surface. Typically, the surface is disposed at a position at which misalignment is unlikely to occur. Therefore, a tilt is unlikely to occur when the lens is mounted on a lens barrel. Thus, even in a case where the surface is an aspherical surface, a deterioration of resolution which deterioration is caused by a slight tilt error or decenter error during assembly of the lens is unlikely to be induced.

The lens unit in accordance with an eighteenth aspect of the present invention is arranged such that, in any one of the first through seventeenth aspects, a numerical aperture on an image side satisfies not less than 0.4. According to the above configuration, the lens unit has good resolution.

The lens unit in accordance with a nineteenth aspect of the present invention is arranged so as to, in any one of the first through eighteenth aspects, further include a lens barrel, wherein the first lens, the second lens, and the third lens are accommodated and fixed in the lens barrel.

The lens unit in accordance with a twentieth aspect of the present invention is arranged such that, in the nineteenth aspect, the lens barrel has: a first hole in which the third lens is fitted; a second hole which is connected to the first hole, which has a diameter larger than a diameter of the first hole, in which the second lens is fitted in a state where a first spacer having a ring shape intervenes between the second lens and the third lens, and in which the first lens is fitted in a state where a second spacer having a ring shape intervenes between the first lens and the second lens; and a third hole which is connected to the second hole, which has a diameter larger than the diameter of the second hole, and in which a third spacer having a ring shape is fitted, and a surface of the first lens which surface is not in contact with the second spacer is pressed by the third spacer. According to the above configuration, the lens unit is compactly accommodated.

The lens unit in accordance with a twenty-first aspect of the present invention is arranged such that, in the twentieth aspect, a thickness of the first spacer is greater than a thickness of each of the second spacer and the third spacer. According to the above configuration, a tilt error is unlikely to occur when the lenses are assembled in the lens barrel.

The lens unit in accordance with a twenty-second aspect of the present invention is arranged such that, in any one of the nineteenth through twenty-first aspects, the lens barrel is made of an aluminum alloy.

An optical system in accordance with a twenty-third aspect of the present invention includes: a first lens unit and a second lens unit each of which is a lens unit described in any one of the above aspects; and a phase shifter which is disposed between the first lens unit and the second lens unit, wherein the first lens unit and the second lens unit are disposed symmetrically with respect to the phase shifter. According to the above configuration, the optical system becomes compact.

The optical system in accordance with a twenty-fourth aspect of the present invention is arranged such that, in the twenty-third aspect, the phase shifter is of a transmission type or a reflection type.

The optical system in accordance with a twenty-fifth aspect of the present invention is arranged such that, in the twenty-third or twenty-fourth aspect, a modulation transfer function in a wavelength range of 7 pm to 14 pm and at a spatial frequency of 41.7 cycles/mm satisfies not less than 0.35 in an image circle. According to the above configuration, the optical system has high resolution, and resolution on an image plane is improved.

A spectral characteristic measurement device in accordance with a twenty-sixth aspect of the present invention includes an optical system described in any one of the twenty-third through twenty-fifth aspects. According to the above configuration, it is possible to obtain a waveform of a clear and well resolved interferogram. Therefore, it is possible to evaluate a sample with high accuracy.

[Supplementary note]

The present invention is not limited to the embodiments, but can be altered by a skilled person in the art within the scope of the claims. The present invention also encompasses, in its technical scope, any embodiment derived by combining technical means disclosed in differing embodiments.

Reference Signs List

1 Optical system
2, 3, 5 Lens unit
21, 51 Lens barrel
22, 52 First hole
23, 53 Second hole
24, 54 Third hole
55 Fourth hole
25, 57 First spacer
26, 58 Second spacer
27, 59 Third spacer
4 Diaphragm
6 Sample support plate
7 Detecting section

8 Phase shifter
81 Fixed mirror section
82 Movable mirror section
83 Driving section
10 Spectral characteristic measurement device

**Claims**

1. A lens unit which comprises a first lens, a second lens, and a third lens that are disposed in order and which is used for an infrared region that includes at least any one of wavelengths in a range of 7 pm to 14 pm, wherein

   an effective diameter of the first lens is larger than an effective diameter of the third lens, and
   an optical axis thickness of the third lens is greater than an optical axis thickness of any one of the first lens and the second lens.

2. The lens unit as set forth in claim 1, wherein the optical axis thickness of the third lens is 0.5 times to 2 times a second distance which is a distance on an optical axis between the second lens and the third lens.

3. The lens unit as set forth in claim 1 or 2, wherein a first distance which is a distance on an optical axis between the first lens and the second lens is shorter than a second distance which is a distance on the optical axis between the second lens and the third lens.

4. The lens unit as set forth in claim 3, wherein a ratio of the second distance to the first distance is not more than 9.

5. The lens unit as set forth in any one of claims 1 through 4, wherein the third lens is made of chalcogenide glass which has a refractive index of 2.5 to 4.0 at a wavelength of 10 pm.

6. The lens unit as set forth in claim 5, wherein the second lens is made of chalcogenide glass which has a refractive index of 2.5 to 4.0 at a wavelength of 10 pm.

7. The lens unit as set forth in claim 5 or 6, wherein the first lens is made of germanium.

8. The lens unit as set forth in any one of claims 1 through 7, wherein:

   the first lens has positive power and has a meniscus shape in which a second lens side of the first lens is concave;
   the second lens has negative power; and
   the third lens has positive power and has a meniscus shape in which a second lens side of the third lens is convex.

9. The lens unit as set forth in any one of claims 1 through 8, comprising a diaphragm that is located to a side of the first lens which side is opposite from the second lens in a direction of an optical axis.

10. The lens unit as set forth in claim 9, wherein a ratio of a diameter of the diaphragm to an effective diameter of an image is 3 to 5.

11. The lens unit as set forth in any one of claims 1 through 10, wherein the third lens is made of a material which has, at a wavelength of 10 pm, an internal transmittance that is equal to or higher than an internal transmittance of a material of which the second lens is made and that is equal to or higher than an internal transmittance of a material of which the first lens is made.

12. The lens unit as set forth in any one of claims 1 through 11, wherein the second lens has a diffraction surface.

13. The lens unit as set forth in claim 12, wherein a level difference between a concave and a convex of the diffraction surface is 1 pm to 10 pm.

14. The lens unit as set forth in any one of claims 1 through 13, wherein at least one surface of the first lens is a spherical surface.

15. The lens unit as set forth in any one of claims 1 through 14, wherein both surfaces of the first lens are spherical surfaces.

16. The lens unit as set forth in any one of claims 1 through 15, wherein at least one surface of the second lens or the third lens is an aspherical surface, or at least one surface of each of the second lens and the third lens is an aspherical surface.

17. The lens unit as set forth in any one of claims 1 through 16, wherein a surface of the third lens which surface is located on a side opposite from a side that faces the second lens is an aspherical surface.

18. The lens unit as set forth in any one of claims 1 through 17, wherein a numerical aperture on an image side satisfies not less than 0.4.

19. The lens unit as set forth in any one of claims 1 through 18, further comprising a lens barrel, wherein the first lens, the second lens, and the third lens are accommodated and fixed in the lens barrel.

20. The lens unit as set forth in claim 19, wherein
the lens barrel has:

a first hole in which the third lens is fitted;
a second hole which is connected to the first hole, which has a diameter larger than a diameter of the first hole, in which the second lens is fitted in a state where a first spacer having a ring shape intervenes between the second lens and the third lens, and in which the first lens is fitted in a state where a second spacer having a ring shape intervenes between the first lens and the second lens; and
a third hole which is connected to the second hole, which has a diameter larger than the diameter of the second hole, and in which a third spacer having a ring shape is fitted, and
a surface of the first lens which surface is not in contact with the second spacer is pressed by the third spacer.

21. The lens unit as set forth in claim 20, wherein a thickness of the first spacer is greater than a thickness of each of the second spacer and the third spacer.

22. The lens unit as set forth in any one of claims 19 through 21, wherein the lens barrel is made of an aluminum alloy.

23. An optical system comprising:

a first lens unit and a second lens unit each of which is a lens unit recited in any one of claims 1 through 22; and
a phase shifter which is disposed between the first lens unit and the second lens unit, wherein
the first lens unit and the second lens unit are disposed symmetrically with respect to the phase shifter.

24. The optical system as set forth in claim 23, wherein the phase shifter is of a transmission type or a reflection type.

25. The optical system as set forth in claim 23 or 24, wherein a modulation transfer function in a wavelength range of 7 pm to 14 pm and at a spatial frequency of 41.7 cycles/mm satisfies not less than 0.35 in an image circle.

26. A spectral characteristic measurement device comprising an optical system recited in any one of claims 23 through 25.

# FIG. 1

FIG. 2

FIG. 3

FIG. 4

FIG. 5

FIG. 6

# FIG. 7

MTF

Tangential · Object height (mm)
- ·········· 0.00
- ———— 1.20
- ·—·—·—· 2.40
- ·········· 3.60
- ·—··—··— 4.80

Sagittal
- ———— 1.20
- ·—·—·—· 2.40
- ·········· 3.60
- ·—··—··— 4.80

Diffraction limit

Spatial frequency (cycles/mm)

EP 4 382 984 A1

FIG. 8

FIG. 9

EP 4 382 984 A1

FIG. 10

MTF

Tangential | Object height (mm)
············· 0.00
————— 1.20
·—·—·—·— 2.40
·········· 3.60
·—··—··— 4.80

Sagittal
————— 1.20
·—·—·—·— 2.40
·········· 3.60
·—··—··— 4.80

Diffraction limit

Spatial frequency (cycles/mm)

EP 4 382 984 A1

# FIG. 11

EP 4 382 984 A1

FIG. 12

FIG. 14

EP 4 382 984 A1

FIG. 15

FIG. 16

FIG. 17

FIG. 18

FIG. 19

EP 4 382 984 A1

## FIG. 20

EP 4 382 984 A1

# FIG. 21

EP 4 382 984 A1

FIG. 22

## FIG. 23

EP 4 382 984 A1

FIG. 24

Field curvature (mm)

Distortion (%)

| | Tangential | Sagittal |
|---|---|---|
| Wavelength (μm) | | |
| 7 | a | b |
| 8.5 | c | d |
| 10 | e | f |
| 12 | g | h |
| 14 | i | j |

EP 4 382 984 A1

46

FIG. 25

FIG. 26

FIG. 27

FIG. 28

EP 4 382 984 A1

## INTERNATIONAL SEARCH REPORT

| International application No. |
| --- |
| **PCT/JP2022/029460** |

### A. CLASSIFICATION OF SUBJECT MATTER

***G02B 13/14***(2006.01)i; ***G01J 3/36***(2006.01)i; ***G01J 3/453***(2006.01)i; ***G02B 7/02***(2021.01)i; ***G02B 13/00***(2006.01)i; ***G02B 13/18***(2006.01)i

FI: G02B13/14; G01J3/36; G01J3/453; G02B7/02 A; G02B7/02 Z; G02B13/00; G02B13/18

According to International Patent Classification (IPC) or to both national classification and IPC

### B. FIELDS SEARCHED

Minimum documentation searched (classification system followed by classification symbols)

G02B13/14; G01J3/36; G01J3/453; G02B7/02; G02B13/00; G02B13/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2017-126041 A (KYOCERA OPTEC CO., LTD.) 20 July 2017 (2017-07-20) claims, examples 1-11 | 1, 2, 5-11, 14-18 |
| Y | claims, examples 1-11 | 12, 13, 19-22 |
| A | claims, examples 1-11 | 3, 4, 23-26 |
| X | JP 2012-173561 A (TAMRON CO., LTD.) 10 September 2012 (2012-09-10) 1st, 2nd, 5th embodiments, claims | 1, 5-11, 14-18 |
| Y | 1st, 2nd, 5th embodiments, claims | 12, 13, 19-22 |
| A | 1st, 2nd, 5th embodiments, claims | 2-4, 23-26 |
| X | JP 2016-18162 A (TAMRON CO., LTD.) 01 February 2016 (2016-02-01) 1st to 4th, 6th embodiments, paragraph [0028] | 1-7, 9-11, 14-18 |
| Y | 1st to 4th, 6th embodiments, paragraph [0028] | 12, 13, 19-22 |
| A | 1st to 4th, 6th embodiments, paragraph [0028] | 8, 23-26 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 August 2022** | **13 September 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/029460** |

**C.      DOCUMENTS CONSIDERED TO BE RELEVANT**

| Category* | Citation of document, with indication, where appropriate, of the relevant passages | Relevant to claim No. |
| --- | --- | --- |
| X | KR 10-2013-0044063 A (KOREA PHOTONICS TECHNOLOGY INSTITUTE) 02 May 2013 (2013-05-02)<br>    examples 3, 4 | 1, 3-11, 14-18 |
| Y |     examples 3, 4 | 12, 13, 19-22 |
| A |     examples 3, 4 | 2, 23-26 |
| Y | WO 2015/029645 A1 (KONICA MINOLTA INC.) 05 March 2015 (2015-03-05)<br>    claims, each example | 12, 13 |
| Y | JP 2010-134378 A (SUMITOMO ELECTRIC INDUSTRIES, LTD.) 17 June 2010 (2010-06-17)<br>    3rd embodiment, fig. 6 | 19-22 |
| Y | WO 2019/244571 A1 (NIDEC COPAL CORP.) 26 December 2019 (2019-12-26)<br>    embodiments, fig. 2 | 19-22 |
| Y | JP 2018-105905 A (MAXELL HOLDINGS LTD.) 05 July 2018 (2018-07-05)<br>    fig. 1, 2, paragraph [0017] | 19-22 |
| A | WO 2020/203853 A1 (HAMAMATSU PHOTONICS KK) 08 October 2020 (2020-10-08)<br>    entire text, all drawings | 23-26 |

Form PCT/ISA/210 (second sheet) (January 2015)

**INTERNATIONAL SEARCH REPORT**
Information on patent family members

International application No.

**PCT/JP2022/029460**

| Patent document cited in search report | | | Publication date (day/month/year) | Patent family member(s) | | | Publication date (day/month/year) |
|---|---|---|---|---|---|---|---|
| JP | 2017-126041 | A | 20 July 2017 | (Family: none) | | | |
| JP | 2012-173561 | A | 10 September 2012 | US | 2012/0212807 | A1 | |
| | | | | 1st, 2nd, 5th embodiments, claims | | | |
| | | | | CN | 102681147 | A | |
| | | | | CN | 104142560 | A | |
| JP | 2016-18162 | A | 01 February 2016 | (Family: none) | | | |
| KR | 10-2013-0044063 | A | 02 May 2013 | (Family: none) | | | |
| WO | 2015/029645 | A1 | 05 March 2015 | (Family: none) | | | |
| JP | 2010-134378 | A | 17 June 2010 | (Family: none) | | | |
| WO | 2019/244571 | A1 | 26 December 2019 | JP | 2019-219486 | A | |
| JP | 2018-105905 | A | 05 July 2018 | (Family: none) | | | |
| WO | 2020/203853 | A1 | 08 October 2020 | JP | 2020-169946 | A | |
| | | | | EP | 3951337 | A1 | |
| | | | | entire text, all drawings | | | |
| | | | | CN | 113661382 | A | |

Form PCT/ISA/210 (patent family annex) (January 2015)

**REFERENCES CITED IN THE DESCRIPTION**

**Patent documents cited in the description**

- JP 5637488 B
- JP 2020064165 A

- WO 2020105719 A1